# FASCICULE DE BREVET EUROPEEN

(11) **EP 4 248 538 B1**
(45) Date de publication et mention de la délivrance du brevet: **11.11.2026**
(21) Numéro de dépôt: 21824611.4
(22) Date de dépôt: 17.11.2021
(51) Int. Cl.: H02J 3/16, H02J 3/32, H02J 3/38, H02J 3/48, H02J 3/50

(54) **DISPOSITIF ET PROCÉDÉ DE CONTRÔLE DE LA TENSION DES MICRORÉSEAUX**
VORRICHTUNG UND VERFAHREN ZUR SPANNUNGSREGELUNG VON MIKRONETZEN
DEVICE AND METHOD FOR CONTROLLING THE VOLTAGE OF MICROGRIDS

(30) Priorité: 18.11.2020 FR 2011830
(43) Date de publication de la demande: 27.09.2023
(60) Demande divisionnaire: 23219745.9 / 4 322 362
(73) Titulaire: Electricité de France, 75008 Paris (FR)
(72) Inventeur: BENAVENT, Fabien, 75017 PARIS (FR)
(74) Mandataire: Regimbeau
(86) Numéro de dépôt international: PCT/FR2021/052029
(87) Numéro de publication internationale: WO 2022/106782

(56) Documents cités:
- CN-A- 108 777 493
- CN-A- 109 038 644
- KR-A- 20140 098 431
- US-A1- 2016 204 611

## Description

L'invention concerne un dispositif de contrôle d'une ou plusieurs unité(s) de génération d'électricité et/ou unité(s) de stockage d'électricité, destinée(s) à être connectée(s) à au moins une ligne d'un microréseau de consommation et/ou de production d'électricité.

Le domaine de l'invention concerne les microréseaux (en anglais « microgrid » de consommation et/ou de production d'électricité) comportant d'une part une ou plusieurs premières sources de production d'électricité centralisées (désignées par G₁, G₂, ...G_{M} dans ce qui suit et pouvant être par exemple des sources thermiques (diesel ou au charbon par exemple, ou autres) et des deuxièmes sources de production d'électricité distribuées sur des lignes reliées aux premières sources, les deuxièmes sources de production d'électricité pouvant fonctionner par intermittence et pouvant comprendre par exemple des sources de production d'électricité photovoltaïques ou à éoliennes. Les premières sources de production d'électricité centralisées peuvent fonctionner la totalité du temps.

Les microréseaux peuvent fonctionner avec une faible consommation (par exemple ordre de grandeur de consommation inférieure à quelques dizaines de MW) et de manière autonome une partie ou la totalité du temps. Ses sources d'énergie distribuées sont en général des producteurs renouvelables avec ou sans batterie de stockage d'énergie. Ces microréseaux peuvent par exemple être présents sur des îles, ou dans des endroits difficiles d'accès, comme par exemple les zones montagneuses, les déserts.

Dans un premier type de systèmes électriques, à savoir les systèmes électriques conventionnels disposant d'un réseau de transport, le fonctionnement et les services-système de ces systèmes électriques sont basés sur la corrélation U-Q (tension - puissance réactive) d'une part et f-P (fréquence - puissance active) d'autre part. Ces corrélations sont la conséquence des caractéristiques électriques des lignes aériennes HTB (haute tension B pour des installations électriques dans lesquelles la tension excède 50000 volts en courant alternatif) qui présentent une impédance équivalente de nature fortement inductive.

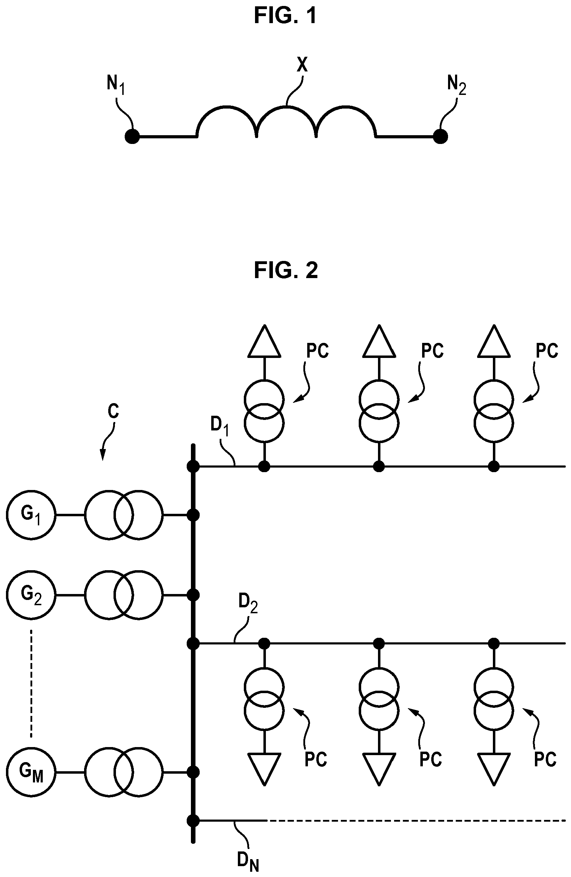

En assimilant l'impédance équivalente d'une ligne HTB à sa réactance équivalente X entre deux nœuds N1 et N2 selon la figure 1 et en linéarisant les équations de la puissance active et de la puissance réactive du nœud N1, on obtient les expressions couramment utilisées ci-dessous : ${P}_{1} \approx \frac{{U}_{1} {U}_{2}}{X} \left[{θ}_{1}-{θ}_{2}\right]$ ${Q}_{1} \approx \frac{{U}_{1}}{X} \left[{U}_{1}-{U}_{2}\right]$ Avec :
P₁, Q₁, U₁ et θ₁ respectivement la puissance active, la puissance réactive, la valeur efficace des tensions entre phases et l'angle de la tension du nœud N1,
U₂ et θ₂ respectivement la valeur efficace des tensions entre phases et l'angle de la tension du nœud N2,
X la réactance équivalente de la ligne aérienne HTB

Ces équations illustrent les corrélations U-Q et f-P mentionnées plus haut, la puissance active P₁ est proportionnelle à la différence θ₁ - θ₂ des angles des tensions qui correspondent eux-mêmes aux intégrales des fréquences des deux nœuds N1 et N2, multipliées par un facteur de 2rr et la puissance réactive Q₁ est proportionnelle à la différence U₁ - U₂ des tensions des deux nœuds N1 et N2.

Par conséquent, la tension du réseau de transport peut être réglée par les groupes de production, les dispositifs de fourniture et/ou de compensation de puissance réactive, à leurs différents points de raccordement tout en ayant un impact négligeable sur les transits de puissance active dans le système.

Dans un deuxième type de systèmes électriques, à savoir les microréseaux sans sources d'énergie distribuées, la structure classique des microréseaux consiste à la figure 2 en une unique centrale thermique C composée de plusieurs groupes G₁, G₂, ...G_{M} de production et connectée à plusieurs départs D₁, D₂, ..., D_{N} de lignes où sont distribués des postes consommateurs PCₗ, PCₗ₊₁, PCₗ₊₂.

Contrairement aux systèmes conventionnels, le niveau de tension correspond généralement à de la HTA (haute tension A pour des installations électriques dans lesquelles la tension excède 1000 volts sans dépasser 50000 volts en courant alternatif) ou de la BT (basse tension pour des installations électriques dans lesquelles les tensions sont comprises entre 50 et 1000 volts en régime de tension alternative) et l'impédance des lignes est majoritairement résistive dans le cas des lignes aériennes ou résistive - capacitive dans le cas des lignes sous-terraines. Les corrélations présentées ci-dessus pour le premier type de systèmes électriques sont par conséquent inopérantes et doivent être recalculées.

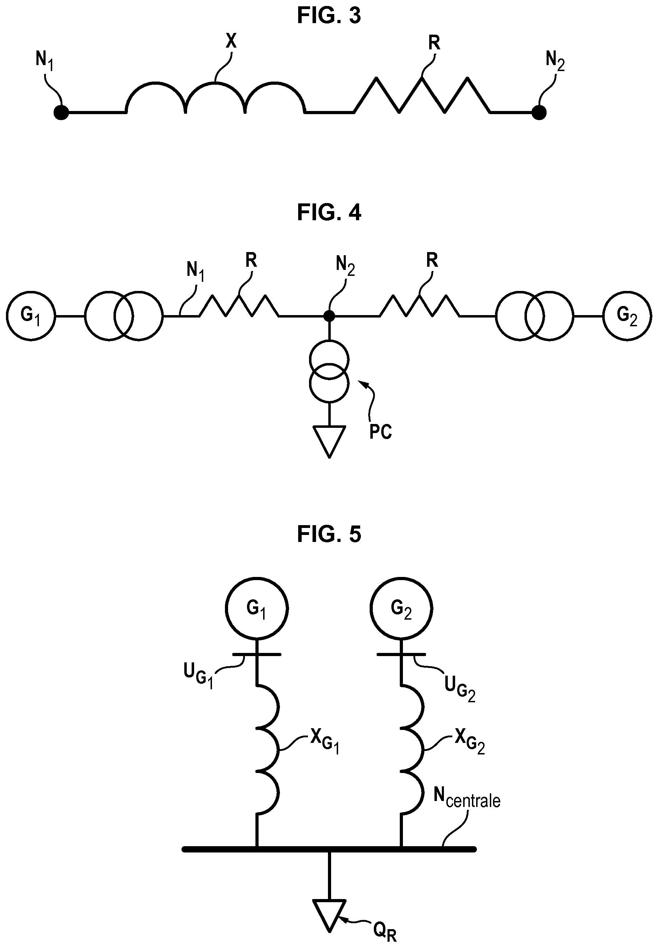

Les lignes aériennes HTA et BT peuvent être modélisées selon la figure 3 avec entre les deux nœuds électrique N1 et N2 reliés par la ligne une résistance R en série avec une inductance équivalente X potentiellement non-négligeable.

En linéarisant les équations de la puissance active et de la puissance réactive au nœud N1 on obtient les expressions ci-dessous : ${P}_{1} \approx \frac{{XU}_{1} {U}_{2}}{{R}^{2} + {X}^{2}} \left[{θ}_{1}-{θ}_{2}\right] + \frac{{RU}_{1}}{{R}^{2} + {X}^{2}} \left[{U}_{1}-{U}_{2}\right]$ ${Q}_{1} \approx \frac{{XU}_{1}}{{R}^{2} + {X}^{2}} \left[{U}_{1}-{U}_{2}\right] - \frac{{RU}_{1} {U}_{2}}{{R}^{2} + {X}^{2}} \left[{θ}_{1}-{θ}_{2}\right]$ Avec :
P₁, Q₁, U₁ et θ₁ respectivement la puissance active, la puissance réactive, la valeur efficace des tensions entre phases et l'angle de la tension du nœud N1
U₂ et θ₂ respectivement la valeur efficace des tensions entre phases et l'angle de la tension du nœud N2
R et X la résistance équivalente et la réactance équivalente de la ligne aérienne HTA ou BT.

Les puissances actives et réactives P₁, Q₁ dépendent dans ces conditions toutes deux à la fois de la différence U₁ - U₂ des valeurs efficaces des tensions et de la différence θ₁ - θ₂ de leurs angles.

En négligeant la réactance équivalente X de la ligne devant sa résistance équivalente R, on obtient les expressions simplifiées ci-dessous : ${P}_{1} \approx \frac{{U}_{1}}{R} \left[{U}_{1}-{U}_{2}\right]$ ${Q}_{1} \approx - \frac{{U}_{1} {U}_{2}}{R} \left[{θ}_{1}-{θ}_{2}\right]$

On observe alors une inversion des corrélations existantes dans les systèmes électriques du premier type disposant d'un réseau de transport pour obtenir les nouvelles corrélations U-P et f-Q pour les installations du deuxième type.

Par conséquent, si les groupes thermiques G₁, G₂, ...G_{M} de production d'un microréseau étaient distribués au lieu d'être centralisés comme l'illustre la figure 4, leur pilotage devrait être complètement adapté pour tenir compte des corrélations U-P et f-Q : la tension des groupes G₁, G₂, ...G_{M} de production serait modulée pour réguler leur puissance active et leur fréquence serait modulée pour réguler leur puissance réactive.

On décrit ci-dessous un réglage primaire de tension et un partage de la charge en puissance réactive, suivant l'état de la technique. Pour les groupes de production centralisés G₁, G₂, ...G_{M} dans la grande majorité des microréseaux, les corrélations définies ci-dessus pour le premier type s'appliquent entre les groupes G₁, G₂, ...G_{M} car l'impédance équivalente des ensembles alternateurs-transformateurs de ces groupes G₁, G₂, ...G_{M} est majoritairement inductive.

L'exemple ci-dessous de la figure 5 représente deux groupes de production centralisés G₁ et G₂, modélisés de façon équivalente en aval de leur transformateur élévateur (côté réseau), alimentant une charge consommant la puissance réactive Q_{R} et modélisée par une source de courant idéale, connectée au même nœud électrique N_{centrale} que les groupes de production centralisés G₁ et G₂.

Les puissances réactives fournies par les groupes G₁ et G₂ au niveau de leur stator peuvent être exprimés par les équations suivantes : ${Q}_{{G}_{1}} \approx \frac{{X}_{{G}_{2}}}{{X}_{{G}_{1}} + {X}_{{G}_{2}}} \sqrt{3} {U}_{{G}_{1}} {I}_{R} sin \left({θ}_{{G}_{1}}-{γ}_{R}\right) + \frac{{U}_{{G}_{1}} \left[{U}_{{G}_{1}}-{U}_{{G}_{2}}\right]}{{X}_{{G}_{1}} + {X}_{{G}_{2}}}$ ${Q}_{{G}_{2}} \approx \frac{{X}_{{G}_{1}}}{{X}_{{G}_{1}} + {X}_{{G}_{2}}} \sqrt{3} {U}_{{G}_{2}} {I}_{R} sin \left({θ}_{{G}_{2}}-{γ}_{R}\right) + \frac{{U}_{{G}_{2}} \left[{U}_{{G}_{2}}-{U}_{{G}_{1}}\right]}{{X}_{{G}_{1}} + {X}_{{G}_{2}}}$ Avec :
*Q*_{*G*₁} *et Q*_{G₂} les puissances réactives injectées par les deux groupes G₁ et G₂ au niveau de leur stator,
*X*_{G₁} *et X*_{*G*₂} les réactances équivalentes des ensembles alternateur - transformateur des deux groupes G₁ et G₂ ramenées côté réseau,
*θ*_{G₁} *et* θ_{G₂} les angles des tensions des deux groupes G₁ et G₂ ramenées côté réseau,
*I_{R} et γ_{R}* la valeur efficace et l'angle du courant de la charge Q_{R},
*U*_{G₁} *et U*_{G₂} les tensions des deux groupes G₁ et G₂ au niveau de leur stator ramenées côté réseau,

Dans ces équations, les premiers termes $\frac{{X}_{{G}_{2}}}{{X}_{{G}_{1}} + {X}_{{G}_{2}}} \sqrt{3} {U}_{{G}_{1}} {I}_{R} sin \left({θ}_{{G}_{1}}-{γ}_{R}\right)$ et $\frac{{X}_{{G}_{1}}}{{X}_{{G}_{1}} + {X}_{{G}_{2}}} \sqrt{3} {U}_{{G}_{2}} {I}_{R} sin \left({θ}_{{G}_{2}}-{γ}_{R}\right)$ correspondent à ce que l'on peut considérer comme étant la « contribution naturelle » des groupes G₁ et G₂ de production à la fourniture de puissance réactive. Celle-ci dépend principalement du terme $\frac{{X}_{{G}_{2}}}{{X}_{{G}_{1}} + {X}_{{G}_{2}}}$ pour le groupe G₁ et du terme $\frac{{X}_{{G}_{1}}}{{X}_{{G}_{1}} + {X}_{{G}_{2}}}$ pour le groupe G₂. Ces termes traduisent le fait que le groupe G₁ ou G₂ ayant la réactance équivalente la plus faible fournira davantage de puissance réactive à la charge que le groupe G₂ ou G₁ ayant la réactance équivalente la plus grande.

Les deuxièmes termes $\frac{{U}_{{G}_{1}} \left[{U}_{{G}_{1}}-{U}_{{G}_{2}}\right]}{{X}_{{G}_{1}} + {X}_{{G}_{2}}}$ et $\frac{{U}_{{G}_{2}} \left[{U}_{{G}_{2}}-{U}_{{G}_{1}}\right]}{{X}_{{G}_{1}} + {X}_{{G}_{2}}}$ correspondent à ce que l'on peut considérer comme étant la « contribution contrôlée » des groupes de production G₁ et G₂ à la fourniture de puissance réactive. Ils traduisent le fait que le groupe G₁ ou G₂ ayant la tension statorique la plus élevée fournira davantage de puissance réactive à la charge que sa contribution naturelle tandis que le groupe G₂ ou G₁ ayant la tension statorique la plus faible fournira moins de puissance réactive à la charge que sa contribution naturelle.

On peut par conséquent noter que si les tensions statoriques des groupes G₁ et G₂ sont identiques, la contribution contrôlée à la fourniture de puissance réactive n'existe pas et seul le rapport des réactances équivalentes des groupes G₁ et G₂ détermine leur fourniture de puissance réactive. Il n'y a dans ce cas pas de considération pour les capacités en puissance réactive des groupes G₁ et G₂ qui peuvent être dissymétriques ce qui se traduit par une désoptimisation du système.

A l'inverse la modulation des tensions des groupes G₁ et G₂ permet de piloter l'injection de puissance réactive des groupes G₁ et G₂.

Dans un troisième type d'installations électriques, la transition énergétique des microréseaux se traduit dans certains cas par l'installation de capacités importantes d'énergie renouvelable, notamment de centrales photovoltaïques, pouvant dépasser plusieurs fois la consommation maximale des microréseaux en puissance active. Il est alors indispensable d'installer une solution de stockage, souvent composée de batteries électrochimiques.

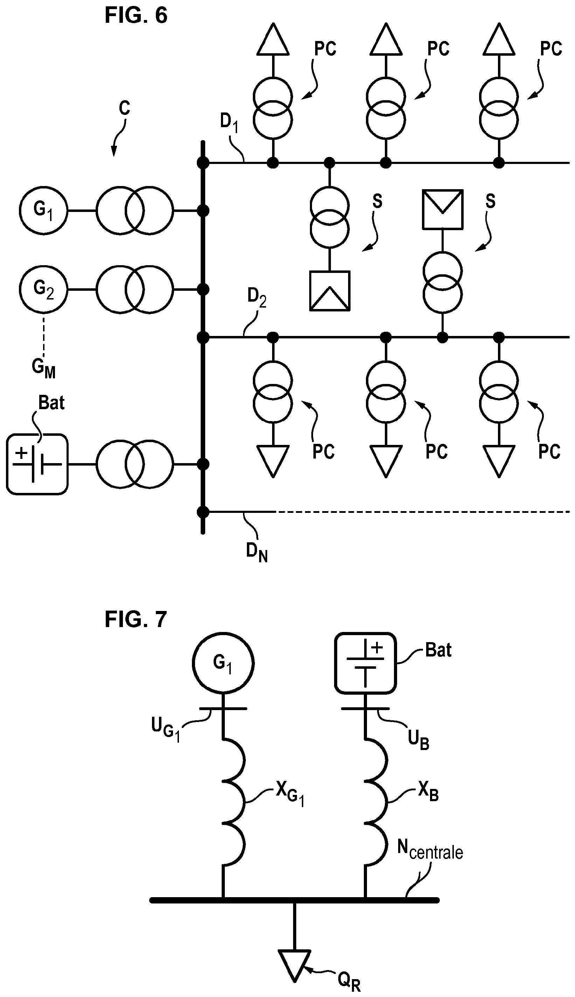

Ces mêmes microréseaux sont en général amenés à devoir fonctionner pendant une partie de la journée sans ou avec peu de groupes thermiques G₁, G₂, ...G_{M} de production centralisés et il est par conséquent nécessaire que les batteries de stockage disposent d'un mode de fonctionnement permettant de suppléer et remplacer les services système réalisés par les groupes thermiques G₁, G₂, ...G_{M} tels que le réglage de tension, le réglage de fréquence, l'injection de courant de défaut et la capacité à réalimenter le microgrid après un incident généralisé (capacité de « black start » en anglais, qui signifie démarrage à froid). Il est dès lors préférable pour le bon fonctionnement de ces services système que ces batteries Bat de stockage soient centralisées avec les groupes thermiques G₁, G₂, ...G_{M} dans une centrale C de production d'électricité et de stockage d'électricité. La structure de microréseau résultant est représentée à la figure 6.

Avec cette nouvelle structure de la figure 6, l'ensemble C des batteries Bat et des groupes thermiques G₁, G₂, ...G_{M} peut être séparé par rapport aux sources S de production d'électricité renouvelables distribués avec les postes consommateurs PCₗ, PCₗ₊₁, PCₗ₊₂ sur les départs D₁, D₂, ..., D_{N} de lignes par des longueurs significatives de ces lignes aériennes ou souterraines HTA ou BT et il est dès lors nécessaire de considérer deux niveaux de corrélation physique : les corrélations applicables au niveau intra-centrale C groupes de production - stockage, les corrélations entre la centrale C et les sources S de production d'électricité décentralisées.

Au niveau de la centrale C de production d'électricité et de stockage d'électricité, l'intégration de batteries Bat de stockage ne modifie pas le fonctionnement décrit ci-dessus pour le deuxième type d'installations et il est possible de modéliser ses différentes sources de manière analogue, ainsi que représenté à la figure 7.

Les équations de fourniture de puissance réactive sont identiques à celles mentionnées ci-dessus pour ce deuxième type si l'on remplace les indices des grandeurs relatives au groupe G₂ par les indices B de la batterie Bat (tension U_{B} de la batterie Bat, réactance équivalente X_{B} de la batterie Bat représentées à la figure 7).

On décrit ci-dessous les corrélations entre la centrale C et les sources S de production d'électricité décentralisées et la problématique de la tenue de tension du microréseau.

La centrale C et les sources S de production d'électricité décentralisées étant connectés par des lignes aériennes HTA ou BT, les corrélations applicables sont celles du second type d'installations, c'est-à-dire U-P et f-Q.

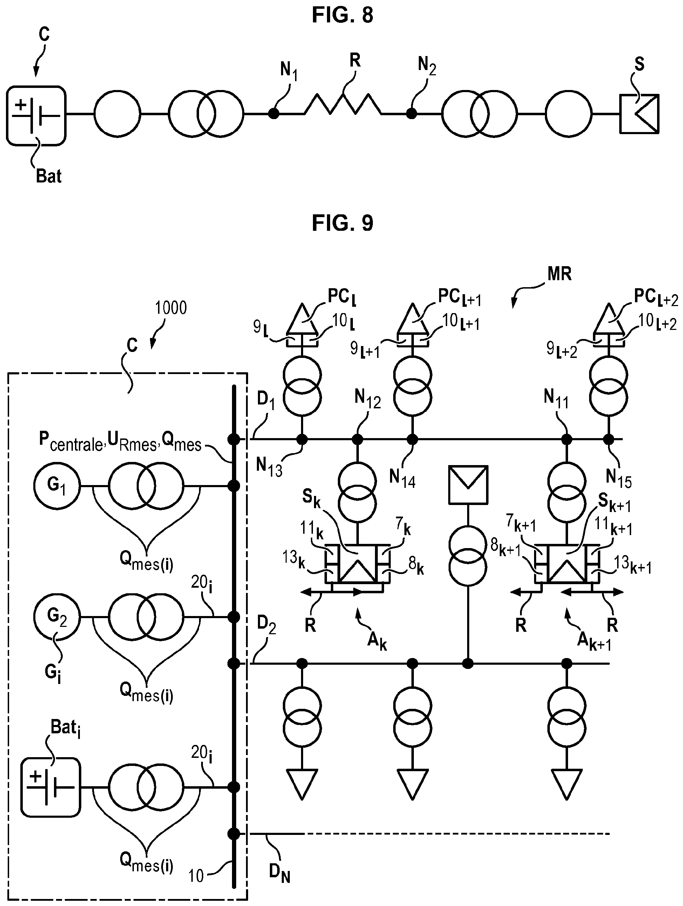

Son impact sur la tenue de tension du microréseau peut être illustré à travers l'exemple d'une source S de production d'électricité décentralisée photovoltaïque chargeant une batterie Bat de la centrale C au travers d'une ligne aérienne assimilée à sa résistance équivalente R entre le nœud N1 situé du côté de la centrale C et le nœud N2 nœud N2 situé du côté de la source S de production d'électricité décentralisée photovoltaïque à la figure 8.

Dans l'exemple de la figure 8, la source S de production d'électricité décentralisée photovoltaïque peut injecter la puissance active maximale disponible grâce à un algorithme de suivi de point de puissance (« maximum power point tracking » en anglais) et la batterie Bat peut maintenir la tension du nœud N1 situé du côté de la centrale C à une valeur proche de la tension nominale si elle dispose d'un algorithme de partage de la puissance réactive ou exactement à la tension nominale si un algorithme de réglage secondaire de tension est également utilisé.

Dans cette situation, la valeur efficace U₂ de la tension au nœud N2 situé du côté de la source S de production d'électricité décentralisée photovoltaïque peut être calculée via l'équation, suivante, où U₁ est la valeur efficace de la tension au nœud N1 : ${U}_{2} \approx {U}_{1} - \frac{{RP}_{1}}{{U}_{1}} ; avec {P}_{1} < 0$

Pour une tension U₁ fixée par la batterie et une résistance équivalente R de ligne donnée, l'élévation de la tension U₂ est donc proportionnelle au transit de puissance active P₁ venant charger la batterie Bat. Ainsi, un premier inconvénient est que si ce transit est suffisamment important, la tension U₂ sortira de la plage contractuelle.

D'une manière plus globale, en reprenant la structure complète d'un microréseau de la figure 6, ce premier inconvénient se traduit par le fait qu'une partie du microréseau pourrait se retrouver en surtension en raison de forts transits de puissance active des sources S de production d'électricité décentralisées vers la batterie Bat.

Bien que le fonctionnement des microréseaux en présence de sources S d'énergie distribuées ait fait l'objets de publications scientifiques, celles-ci se concentrent principalement sur le partage de la charge entre des groupes thermiques G et/ou de batteries de stockage décentralisées en proposant des algorithmes de partage de la charge prenant en considération les corrélations dues aux lignes aériennes HTA ou BT (cf. deuxième type mentionné ci-dessus), par exemple avec un partage de la charge en puissance active et réactive par statisme de type : ${U}_{ref} = {U}_{N} - {K}_{UP} P - {K}_{UQ} Q$ ${f}_{ref} = {f}_{N} - {K}_{fP} P - {K}_{fQ} Q$ Avec :
*U_{ref} et f_{ref}* les références de tension et de fréquence de chaque groupe thermique et batterie *P et Q* la puissance active et la puissance réactive injectée par chaque groupe thermique et batterie
*K_{UP}, K_{UQ}, K_{fp}, K_{fQ}* les coefficients de réglage de l'algorithme.

Des algorithmes plus complexes utilisant le concept d'impédance virtuelle ont également été proposés afin d'améliorer la qualité du partage de la charge, néanmoins leur objectif reste le même.

Certaines publications décrivent des algorithmes de réglage secondaire sans pour autant adresser le premier inconvénient mentionné ci-dessus. En effet, l'utilisation de tels réglages secondaires de tension vise à ramener la tension du nœud électrique contrôlé à une valeur fixe, typiquement la valeur nominale, sans prendre en considération la tenue de tension du reste du réseau qui risque de sortir de sa plage contractuelle lors des périodes de fortes injections de puissance active des sources S de production d'électricité décentralisées vers la batterie centralisée Bat, ce qui est un deuxième inconvénient.

Les documents CN109038644 A, US2016/204611A1, CN108777 93 A et KR2040098431 A divulguent des examples de contrôle de la tension de microréseaux.

Ainsi, le problème est que les solutions existantes de réglage de tension composées d'algorithmes de partage de la puissance réactive couplés ou non avec un algorithme de réglage secondaire de la tension fonctionnant suivant l'état de la technique sont insuffisantes pour assurer la tenue de tension de l'ensemble du réseau en présence de producteurs décentralisés et ne permettent pas de pallier les premier et deuxième inconvénients mentionnés ci-dessus.

Un objectif de l'invention est d'obtenir un dispositif de contrôle de la tension des microréseaux grâce au contrôle d'au moins une unité de production d'électricité et/ou au moins une unité de stockage d'électricité, qui pallie les inconvénients mentionnés ci-dessus.

A cet effet, un premier objet de l'invention est un dispositif de contrôle contrôle d'une centrale, laquelle comporte au moins une unité de génération d'électricité et/ou au moins une unité de stockage d'électricité, et au moins une borne de connexion commune, qui est reliée à l'unité de génération d'électricité et/ou l'unité de stockage d'électricité et qui est destinée à être connectée à au moins une ligne d'un microréseau de consommation et/ou de production d'électricité,
le dispositif de contrôle comportant au moins un premier automate de contrôle central ainsi qu'au moins un deuxième automate de contrôle pour chaque unité de génération d'électricité et/ou unité de stockage d'électricité, le deuxième automate de contrôle étant connecté au premier automate de contrôle central, le premier automate de contrôle central étant configuré pour calculer et transmettre au deuxième automate de contrôle au moins une tension U_{offset(i)} de décalage de chaque unité de génération d'électricité et/ou de chaque unité de stockage d'électricité, afin que la tension de la borne de connexion commune soit réglée à une référence U_{centraleRef} de tension,
caractérisé en ce que le premier automate de contrôle central comporte
un premier organe de mesure ou de détermination d'une puissance active totale P_{centrale} sortant de la centrale, fournie ou absorbée par l'unité de génération d'électricité et/ou l'unité de stockage d'électricité,
un deuxième organe de mesure ou de détermination d'une tension U_{Rmes} de la borne de connexion commune,
un troisième organe de calcul de la référence U_{centraleRef} de tension de la borne de connexion commune selon une première fonction prescrite f dépendant au moins de la puissance active totale P_{centrale},
chaque deuxième automate de contrôle comporte un quatrième organe de mesure ou de détermination d'une première puissance réactive individuelle Qₘₑₛ₍ᵢ₎ fournie ou absorbée par l'unité de génération d'électricité associée à ce deuxième automate et/ou l'unité de stockage d'électricité associée à ce deuxième automate vers la borne de connexion,
le premier automate de contrôle central comporte un premier correcteur de tension, ayant une deuxième fonction de transfert prescrite corr,
le premier automate de contrôle étant configuré pour calculer ${U}_{centraleRef} = f \left({P}_{centrale}\right)$ ${U}_{offset} = corr \left({U}_{centraleRef}-{U}_{Rmes}\right)$
où U_{offset} est une première tension de décalage centrale, calculée en appliquant la deuxième fonction de transfert prescrite corr du premier correcteur à la différence U_{centraleRef} - U_{Rmes}, le premier automate de contrôle est configuré pour calculer la deuxième tension de décalage U_{offset(i)} selon une troisième fonction prescrite à partir de la première tension de décalage centrale U_{offset} et pour transmettre la deuxième tension de décalage U_{offset(i)} au deuxième automate de contrôle pour l'unité de génération d'électricité associée à ce deuxième automate et/ou pour l'unité de stockage d'électricité associée à ce deuxième automate,
le deuxième automate de contrôle est configuré pour calculer au moins une tension U_{ref(i)} de consigne locale pour l'unité de génération d'électricité associée à ce deuxième automate et/ou pour l'unité de stockage d'électricité associée à ce deuxième automate, selon ${U}_{ref \left(i\right)} = {U}_{offset \left(i\right)} - {K}_{UQ \left(i\right)} . {Q}_{mes \left(i\right)}$
où K_{UQ(i)} est un coefficient prescrit, non nul.

Grâce à l'invention, on remédie aux premier et deuxième inconvénients mentionnés ci-dessus.

Suivant un mode de réalisation de l'invention, le premier automate de contrôle central comporte un autre organe de mesure ou de détermination d'une première puissance réactive totale Qₘₑₛ sortant de la centrale, fournie ou absorbée par l'unité de génération d'électricité et/ou l'unité de stockage d'électricité,
la première fonction prescrite f dépend au moins :
- de la puissance active totale P_{centrale} sortant de la centrale, fournie ou absorbée par l'unité de génération d'électricité et/ou l'unité de stockage d'électricité,
- et de la première puissance réactive totale Qₘₑₛ sortant de la centrale, fournie ou absorbée par l'unité de génération d'électricité et/ou l'unité de stockage d'électricité.

Suivant un mode de réalisation de l'invention, la première fonction prescrite f est affine ou linéaire et dépend :
- de la puissance active totale P_{centrale} sortant de la centrale, fournie ou absorbée par l'unité de génération d'électricité et/ou l'unité de stockage d'électricité.

Suivant un mode de réalisation de l'invention, le premier automate de contrôle central comporte un autre organe de mesure ou de détermination d'une première puissance réactive totale Qₘₑₛ sortant de la centrale, fournie ou absorbée par l'unité de génération d'électricité et/ou l'unité de stockage d'électricité,
la première fonction prescrite f est affine ou linéaire et dépend :
- de la puissance active totale P_{centrale} sortant de la centrale), fournie ou absorbée par l'unité de génération d'électricité et/ou l'unité de stockage d'électricité,
- et de la première puissance réactive totale Qₘₑₛ sortant de la centrale, fournie ou absorbée par l'unité de génération d'électricité et/ou l'unité de stockage d'électricité.

Suivant un mode de réalisation de l'invention, la première fonction prescrite f comprend une fonction hystérésis, qui prend pour les valeurs croissantes de la puissance active totale P_{centrale} sortant de la centrale, fournie ou absorbée par l'unité de génération d'électricité et/ou l'unité de stockage d'électricité:
- une valeur nominale de tension strictement positive et prescrite, lorsque les valeurs croissantes de la puissance active totale P_{centrale} sortant de la centrale, fournie ou absorbée par l'unité de génération d'électricité et/ou l'unité de stockage d'électricité deviennent supérieures ou égales à une première valeur strictement négative prescrite de puissance active en restant inférieures à une deuxième valeur strictement positive prescrite de puissance active,
- une valeur minimale de tension strictement positive et prescrite, lorsque les valeurs croissantes de la puissance active totale P_{centrale} sortant de la centrale, fournie ou absorbée par l'unité de génération d'électricité et/ou l'unité de stockage d'électricité restent inférieures à la première valeur strictement négative prescrite de puissance,
- une valeur maximale de tension strictement positive et prescrite, lorsque les valeurs croissantes de la puissance active totale P_{centrale} sortant de la centrale, fournie ou absorbée par l'unité de génération d'électricité et/ou l'unité de stockage d'électricité sont supérieures à la deuxième valeur strictement positive prescrite de puissance active,

la valeur nominale de tension prescrite étant supérieure à la valeur minimale prescrite de tension et étant inférieure à la valeur maximale prescrite de tension,
la fonction hystérésis prenant pour les valeurs décroissantes de la puissance active totale P_{centrale} sortant de la centrale, fournie ou absorbée par l'unité de génération d'électricité et/ou l'unité de stockage d'électricité:
   - la valeur nominale prescrite de tension strictement positive, lorsque les valeurs décroissantes de la puissance active totale P_{centrale} sortant de la centrale, fournie ou absorbée par l'unité de génération d'électricité et/ou l'unité de stockage d'électricité deviennent inférieures ou égales à une troisième valeur strictement positive prescrite de puissance active en restant supérieures à une quatrième valeur strictement négative prescrite de puissance active,
   - la valeur minimale de tension strictement positive, lorsque les valeurs décroissantes de la puissance active totale P_{centrale} sortant de la centrale, fournie ou absorbée par l'unité de génération d'électricité et/ou l'unité de stockage d'électricité sont inférieures à la quatrième valeur strictement négative prescrite de puissance active,
   - la valeur maximale de tension strictement positive, lorsque les valeurs décroissantes de la puissance active totale P_{centrale} sortant de la centrale, fournie ou absorbée par l'unité de génération d'électricité et/ou l'unité de stockage d'électricité sont supérieures à la troisième valeur strictement positive prescrite de puissance active,
la troisième valeur strictement positive prescrite de puissance active étant inférieure à la deuxième valeur strictement positive prescrite de puissance active,
la quatrième valeur strictement négative prescrite de puissance active étant inférieure à la première valeur strictement négative prescrite de puissance active.

Suivant un mode de réalisation de l'invention, le premier automate de contrôle comporte en outre au moins un cinquième organe de réception pour recevoir :
- des premières valeurs de télémesure de tension respectivement de sources de production d'électricité décentralisées du microréseau de consommation et/ou de production d'électricité, distantes d'au moins une distance non nulle les unes par rapport aux autres et par rapport à la borne de connexion commune de la centrale,
- des deuxièmes valeurs de télémesure de tension respectivement de postes consommateurs d'électricité décentralisés de la ligne du microréseau de consommation et/ou de production d'électricité, distants d'au moins une distance non nulle les uns par rapport aux autres et par rapport à la borne de connexion commune de la centrale,
la première fonction prescrite f comporte :
- le calcul d'un maximum de tension entre la tension U_{Rmes} de la borne de connexion commune de la centrale et les premières valeurs de télémesure de tension respectivement des sources de production d'électricité décentralisées du microréseau de consommation et/ou de production d'électricité,
- le calcul d'un minimum de tension entre la tension U_{Rmes} de la borne de connexion commune de la centrale et les deuxièmes valeurs de télémesure de tension respectivement des postes consommateurs d'électricité décentralisés du microréseau de consommation et/ou de production d'électricité,
- la prise en compte de la demi-somme du maximum de tension et du minimum de tension pour le calcul de la référence U_{centraleRef} de tension.

Suivant un mode de réalisation de l'invention, le troisième organe de calcul comporte un deuxième correcteur du type proportionnel, intégrateur et dérivateur fournissant la référence U_{centraleRef} de tension à partir de la différence entre d'une part une tension nominale prescrite du microréseau et d'autre part la demi-somme du maximum de tension et du minimum de tension.

Suivant un mode de réalisation de l'invention, le premier automate de contrôle comporte :
un sixième organe de calcul de consignes respectives de puissance réactive de sources respectives de production d'électricité décentralisées du microréseau de consommation et/ou de production d'électricité, distantes d'au moins une distance non nulle par rapport à la borne de connexion commune, qui sont des proportions au moins de la première puissance réactive totale Qₘₑₛ sortant de la centrale, fournie ou absorbée par l'unité de génération d'électricité et/ou l'unité de stockage d'électricité.

Suivant un mode de réalisation de l'invention, le premier automate de contrôle comporte en outre au moins un septième organe de réception pour recevoir :
- des troisièmes valeurs respectives de télémesure de puissance réactive des sources respectives de production d'électricité décentralisées du microréseau de consommation et/ou de production d'électricité,
le sixième organe de calcul étant configuré pour calculer une deuxième puissance réactive totale égale à la somme de la première puissance réactive totale Qₘₑₛ sortant de la centrale, fournie ou absorbée par l'unité de génération d'électricité et/ou l'unité de stockage d'électricité et des troisièmes valeurs respectives de télémesure de puissance réactive des sources respectives de production d'électricité décentralisées du microréseau (MR) de consommation et/ou de production d'électricité et pour calculer les consignes respectives de puissance réactive des sources respectives de production d'électricité décentralisées du microréseau de consommation et/ou de production d'électricité comme étant des proportions de ladite somme.

Suivant un mode de réalisation de l'invention, lesdites proportions dans les consignes respectives de puissance réactive des sources respectives de production d'électricité décentralisées du microréseau de consommation et/ou de production d'électricité correspondent à des ratios respectifs d'une capacité prescrite respective en puissance réactive de la source respective de production d'électricité décentralisée du microréseau de consommation et/ou de production d'électricité, divisée par une somme des capacités prescrites respectives en puissance réactive des sources respectives de production d'électricité de la ligne du microréseau de consommation et/ou de production d'électricité et des capacités prescrites respectives en puissance réactive de l'unité de génération d'électricité et/ou de l'unité de stockage d'électricité.

Suivant un mode de réalisation de l'invention, la troisième fonction prescrite comprend la division de la première tension de décalage centrale U_{offset} par une tension nominale prescrite de l'unité de génération d'électricité et/ou de l'unité de stockage d'électricité.

Suivant un mode de réalisation de l'invention, le premier automate de contrôle central comporte, comme autre organe, un autre organe de détermination de la première puissance réactive totale Qₘₑₛ sortant de la centrale, fournie ou absorbée par l'unité de génération d'électricité et/ou l'unité de stockage d'électricité, en faisant la somme des premières puissances réactives individuelles Qₘₑₛ₍ᵢ₎.

Suivant un mode de réalisation de l'invention, le premier automate de contrôle central comporte, comme autre organe, un autre organe de mesure de la première puissance réactive totale Qₘₑₛ sortant de la centrale, fournie ou absorbée par l'unité de génération d'électricité et/ou l'unité de stockage d'électricité sur la borne de connexion commune.

Un deuxième objet de l'invention est un procédé de contrôle d'une centrale, laquelle comporte au moins une unité de génération d'électricité et/ouau moins une unité de stockage d'électricité, et au moins une borne de connexion commune, qui est reliée à l'unité de génération d'électricité et/ou l'unité de stockage d'électricité et qui est destinée à être connectée à au moins une ligne d'un microréseau de consommation et/ou de production d'électricité,
procédé dans lequel un automate de contrôle central de l'unité de génération d'électricité et/ou de l'unité de stockage d'électricité calcule et transmet au moins une tension U_{offset(i)} de décalage de chaque unité de génération d'électricité et/ou de chaque unité de stockage d'électricité à au moins un deuxième automate de contrôle de chaque unité de génération d'électricité et/ou unité de stockage d'électricité, afin que la tension de la borne de connexion commune soit réglée à une référence U_{centraleRef} de tension,
caractérisé en ce que
on mesure ou détermine par un premier organe de mesure ou de détermination du premier automate de contrôle central une puissance active totale P_{centrale} sortant de la centrale, fournie ou absorbée par l'unité de génération d'électricité et/ou l'unité de stockage d'électricité,
on mesure par un deuxième organe de mesure du premier automate de contrôle central une tension U_{Rmes} de la borne de connexion commune,
on calcule par un troisième organe de calcul du premier automate de contrôle central une référence U_{centraleRef} de tension de la borne de connexion commune selon une première fonction prescrite f dépendant au moins de la puissance active totale P_{centrale},
on mesure ou détermine par un quatrième organe de mesure ou de détermination du deuxième automate de contrôle une première puissance réactive individuelle Qₘₑₛ₍ᵢ₎ fournie ou absorbée par l'unité de génération d'électricité associée à ce deuxième automate et/ou par l'unité de stockage d'électricité associée à ce deuxième automate vers la borne de connexion,
le premier automate de contrôle central ayant un premier correcteur de tension, ayant une deuxième fonction de transfert prescrite corr,
on calcule par le premier automate de contrôle central ${U}_{centraleRef} = f \left({P}_{centrale}\right)$ ${U}_{offset} = corr \left({U}_{centraleRef}-{U}_{Rmes}\right)$
où U_{offset} est une première tension de décalage centrale, calculée en appliquant la deuxième fonction de transfert prescrite corr du premier correcteur à la différence U_{centraleRef} - U_{Rmes},
on calcule par le premier automate de contrôle la deuxième tension de décalage U_{offset(i)} à partir de la première tension de décalage centrale U_{offset} selon une troisième fonction prescrite et on transmet par le premier automate de contrôle la deuxième tension de décalage U_{Offset(i)} au deuxième automate de contrôle pour l'unité de génération d'électricité associée à ce deuxième automate et/ou pour l'unité de stockage d'électricité associée à ce deuxième automate,
on calcule par le deuxième automate de contrôle au moins une tension U_{ref(i)} de consigne locale pour l'unité de génération d'électricité associée à ce deuxième automate et/ou pour l'unité de stockage d'électricité associée à ce deuxième automate, selon ${U}_{ref \left(i\right)} = {U}_{offset \left(i\right)} - {K}_{UQ \left(i\right)} . {Q}_{mes \left(i\right)}$
où K_{UQ(i)} est un coefficient prescrit, non nul.

Un troisième objet de l'invention est un programme d'ordinateur comportant des instructions de code pour la mise en œuvre du procédé de contrôle d'une centrale ayant au moins une unité de génération d'électricité et/ou au moins une unité de stockage d'électricité tel que décrit ci-dessus, lorsqu'il est exécuté par au moins un automate de contrôle.

L'invention sera mieux comprise à la lecture de la description qui va suivre, donnée uniquement à titre d'exemple non limitatif en référence aux figures ci-dessous des dessins annexés.
La figure 1 est un schéma électrique équivalent d'une ligne de réseau électrique HTB pour un premier type de systèmes électriques, suivant l'état de la technique.
La figure 2 montre un schéma électrique d'un deuxième type de systèmes électriques, suivant l'état de la technique.
La figure 3 est un schéma électrique équivalent d'une ligne de réseau électrique de la figure 2, suivant l'état de la technique.
La figure 4 est un schéma électrique équivalent de groupes de production distribués d'un microréseau suivant l'état de la technique.
La figure 5 est un schéma électrique équivalent de deux groupes de production centralisés d'un microréseau suivant l'état de la technique.
La figure 6 représente un schéma électrique d'un troisième type d'installations électriques suivant l'état de la technique.
La figure 7 est un schéma électrique équivalent d'un groupe de production et d'un système de stockage centralisés, suivant l'état de la technique.
La figure 8 est un schéma électrique équivalent d'un groupe de production et d'un système de stockage distribué d'un microréseau, suivant l'état de la technique.
La figure 9 est un schéma électrique d'un microréseau nécessitant un dispositif de contrôle suivant des modes de réalisation de l'invention.
La figure 10 est un schéma du dispositif de contrôle suivant des modes de réalisation de l'invention.
La figure 11 est un schéma du dispositif de contrôle suivant des modes de réalisation de l'invention.
La figure 12 est un schéma du dispositif de contrôle suivant des modes de réalisation de l'invention.
La figure 13 est un schéma du dispositif de contrôle suivant des modes de réalisation de l'invention.
La figure 14 est un schéma du dispositif de contrôle suivant des modes de réalisation de l'invention.
La figure 15 est un schéma du dispositif de contrôle suivant des modes de réalisation de l'invention.
La figure 16 est un schéma du dispositif de contrôle suivant des modes de réalisation de l'invention.
La figure 17 est un organigramme d'un procédé de contrôle suivant des modes de réalisation de l'invention.
La figure 18 illustre un exemple de microréseau testé avec un exemple de dispositif de contrôle suivant l'état de la technique et avec un exemple de dispositif de contrôle suivant l'invention.
La figure 19 montre des profils de puissance active du microréseau de la figure 18.
La figure 20 montre des courbes de tension du microréseau testé avec un exemple de dispositif de contrôle suivant l'état de la technique.
La figure 21 montre des courbes de tension du microréseau testé avec un exemple de dispositif de contrôle suivant l'invention.
La figure 22 est un schéma du dispositif de contrôle suivant des modes de réalisation de l'invention.
La figure 23 montre un exemple d'architecture de modes de réalisation suivant l'invention.
La figure 24 est un schéma du dispositif de contrôle suivant des modes de réalisation de l'invention.

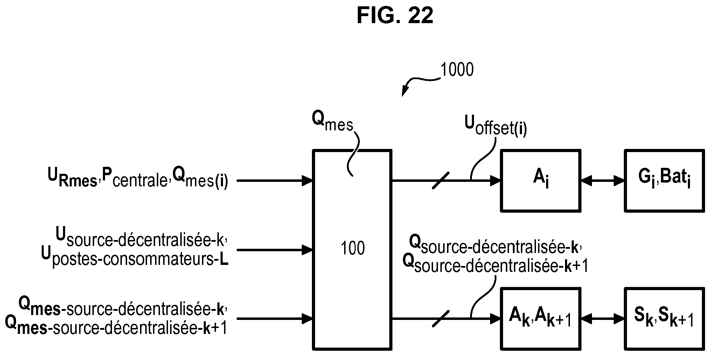

On décrit ci-dessous plus en détail en référence aux figures 9 à 24 des exemples de dispositif 1000 de contrôle d'une (ou plusieurs) unité Gᵢ de génération d'électricité et/ou d'une (ou plusieurs) unité (Batᵢ) de stockage d'électricité. Ce dispositif 1000 de contrôle est composé d'un premier automate central 100 correspondant à un système de gestion d'énergie (en anglais « energy management system ») ainsi qu'un deuxième automate Aᵢ par unité Gᵢ de production d'électricité et/ou un deuxième automate Aᵢ par unité Batᵢ de stockage d'électricité. Dans ce qui suit, l'indice i indique ce qui est prévu pour chaque unité Gᵢ de production d'électricité et/ou un chaque deuxième automate Aᵢ associé à cette unité Gᵢ de production d'électricité ou à cette unité Batᵢ de stockage d'électricité. Il peut donc y avoir un ou plusieurs deuxièmes automates Aᵢ. Le deuxième automate de chaque unité Gᵢ de production d'électricité ou de chaque unité Batᵢ de stockage d'électricité régule la tension interne de cette unité Gᵢ de production d'électricité ou de cette unité Batᵢ de stockage d'électricité.

A la figure 9, le microréseau MR peut comporter par exemple :
- une (ou plusieurs) unité Gᵢ de génération d'électricité, comme par exemple deux unités de génération d'électricité G₁ et G₂, comportant chacune un (ou plusieurs) conducteur 20ᵢ de sortie, servant à l'envoi ou à la réception de courant électrique vers la (ou les) ligne D₁, D₂,.., D_{N}, de transport d'électricité,
- une (ou plusieurs) unité Batᵢ de stockage d'électricité, comportant chacune un (ou plusieurs) conducteur 20ᵢ de sortie, servant à l'envoi ou à la réception de courant électrique vers la (ou les) ligne D₁, D₂,.., D_{N},
- une (ou plusieurs) borne 10 de connexion (par exemple jeu de barres commun, ou autres), reliée en commun au(x) conducteur(s) 20ᵢ de sortie de la (ou des) unité Gᵢ de génération d'électricité et de la (ou des) unité Batᵢ de stockage d'électricité,
- la (ou les) ligne D₁, D₂,.., D_{N}, dont une extrémité (départ de ligne) est connectée à la (ou aux) borne 10 de connexion,
- une (ou plusieurs) sources Sₖ , Sₖ₊₁ de production d'électricité distribuées (appelées également sources Sₖ , Sₖ₊₁ de production d'électricité décentralisées) le long de la ligne D₁, D₂,.., D_{N},
- un (ou plusieurs) postes consommateurs PCₗ, PCₗ₊₁, PCₗ₊₂ d'électricité distribués (appelées également postes consommateurs PCₗ, PCₗ₊₁, PCₗ₊₂ d'électricité décentralisés) le long de la ligne D₁, D₂,.., D_{N}.

Sur chaque départ de ligne de distribution d'électricité, par exemple la ligne D₁ de distribution d'électricité ainsi que représenté à la figure 9, les sources Sₖ, Sₖ₊₁ de production d'électricité distribuées sont reliées à la ligne D₁ de distribution d'électricité pour pouvoir lui envoyer du courant électrique et ont des nœuds N₁₁, N₁₂ de connexion à la ligne D₁, qui sont distants d'au moins une distance non nulle les uns par rapport aux autres et par rapport à la borne 10 de connexion le long de la ligne D₁. Les sources Sₖ, Sₖ₊₁ de production d'électricité distribuées peuvent également être ou comprendre des unités Sₖ, Sₖ₊₁ de stockage d'électricité distribuées.

Sur chaque ligne de distribution d'électricité, par exemple la ligne D₁ de transport d'électricité ainsi que représenté à la figure 9, les postes consommateurs PCₗ, PCₗ₊₁, PCₗ₊₂ d'électricité distribués sont reliés à la ligne D₁ de transport d'électricité pour pouvoir recevoir de celle-ci du courant électrique et ont des nœuds N₁₃, N₁₄, N₁₅ de connexion à la ligne D₁, qui sont distants d'au moins une distance non nulle les uns par rapport aux autres et par rapport à la borne 10 de connexion le long de la ligne D₁.

Suivant un mode de réalisation de l'invention, au moins l'une, plusieurs ou toutes les sources Sₖ, Sₖ₊₁ de production d'électricité distribuées peut comprendre par exemple :
- une unité de production d'énergie dite fatale, ou intermittente, pouvant comprendre par exemple un ou des panneau(x) photovoltaïque(s), une ou des éolienne(s),
- une unité de stockage d'énergie électrique, pouvant comprendre par exemple une ou des batterie(s) électrique(s) (par exemple, cette unité de stockage d'énergie électrique peut comprendre au moins une batterie électrique et au moins un panneau photovoltaïque connectés à la ligne),
une ou des turbine(s) à combustion.

L'expression "énergie fatale" désigne la quantité d'énergie inéluctablement présente ou piégée dans certains processus ou produits, qui parfois - au moins pour partie - peut être récupérée et/ou valorisée. Le terme « fatal » désigne aussi l'énergie qui serait perdue si on ne l'utilisait pas au moment où elle est disponible, par exemple : l'électricité issue des éoliennes, des panneaux solaires, ou celle produite par les centrales hydrauliques ou marémotrices au fil de l'eau. Le terme « intermittent » désigne le fait que l'unité produit de l'énergie une partie de la journée, comme par exemple un ou des panneau(x) photovoltaïque(s), ou d'une manière irrégulière comme par exemple une ou des éolienne(s). Ces unités de production d'énergie peuvent utiliser de l'énergie renouvelable, comme par exemple le rayonnement solaire pour un ou des panneau(x) photovoltaïque(s), ou la force du vent pour une ou des éolienne(s).

La (ou les) unité Gᵢ de génération d'électricité, la (ou les) unité Batᵢ de stockage d'électricité, le (ou les) conducteur 20ᵢ de sortie et la (ou les) borne 10 de connexion peuvent être regroupés dans une centrale C de production d'électricité. La borne 10 de connexion est commune à la (ou aux) unité Gᵢ de génération d'électricité et/ou à la (ou aux) unité Batᵢ de stockage d'électricité, et au(x) conducteur 20ᵢ de sortie, peut être également appelé nœud électrique commun 10 de la centrale C et peut être par exemple un jeu de barres commun de la centrale C de production d'électricité. La centrale comporte par exemple une seule borne 10 de connexion commune ou un seul nœud électrique commun 10.

La (ou les) unité Gᵢ de génération d'électricité peuvent tirer l'électricité qu'elles produisent de moteurs à combustion interne, comme par exemple de moteurs Diesel par l'intermédiaire d'alternateurs et de transformateurs, mais pourraient également être d'un autre type, comme par exemple une centrale de production d'électricité, nucléaire ou au charbon, ou hydroélectrique ou autres.

La (ou les) unité Batᵢ de stockage d'électricité peuvent être ou comprendre une (ou plusieurs) batterie Batᵢ de stockage d'électricité, pouvant être munie d'un onduleur.

Dans un autre exemple, il peut être prévu seulement une (ou plusieurs) unité Gᵢ de génération d'électricité, sans unité Batᵢ de stockage d'électricité.

Dans un autre exemple, il peut être prévu seulement une (ou plusieurs) unité Batᵢ de stockage d'électricité, sans unité Gᵢ de génération d'électricité.

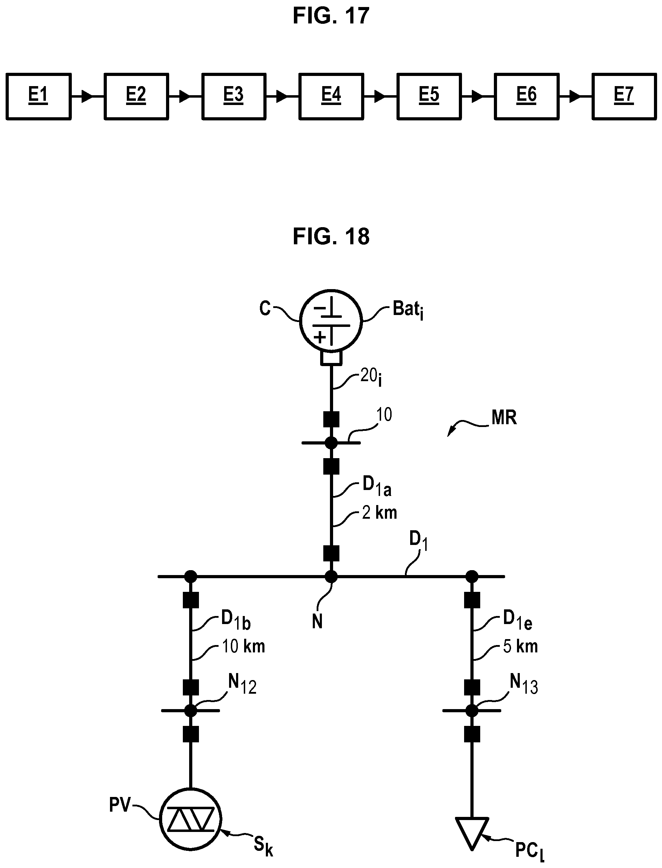

Suivant l'invention, le dispositif 1000 de contrôle de la (ou des) unité Gᵢ de génération d'électricité et/ou de la (ou des) unité Batᵢ de stockage d'électricité et le procédé de contrôle de la (ou des) unité Gᵢ de génération d'électricité et/ou de la (ou des) unité Batᵢ de stockage d'électricité comportent et utilisent le premier automate 100 de contrôle de la centrale C et le (ou les ) deuxièmes automates Aᵢ de contrôle de l'unité Gᵢ de génération d'électricité (connecté au premier automate 100 de contrôle) et/ou de l'unité Batᵢ de stockage d'électricité et est configuré pour calculer (étape E5 à la figure 17) une tension U_{ref(i)} de consigne de chaque unité Gᵢ de génération d'électricité et/ou une tension U_{ref(i)} de consigne de chaque unité Batᵢ de stockage d'électricité.

Ainsi que cela est représenté aux figures 9 à 17, 22, 23 et 24, on décrit ci-dessous ce que comportent les automates 100 et Aᵢ de contrôle pour chaque unité Gᵢ de génération d'électricité et/ou chaque unité Batᵢ de stockage d'électricité et les étapes mises en œuvre par l'automate 100 de contrôle dans le procédé.

L'automate 100 de contrôle comporte un premier organe 1 de mesure ou de détermination d'une puissance active totale P_{centrale} sortant de la centrale C, fournie ou absorbée par la (ou les) unité Gᵢ de génération d'électricité et/ou la (ou les) unité Batᵢ de stockage d'électricité sur la borne 10 de connexion commune (étape E1 effectuée par ce premier organe 1). Dans un mode de réalisation, le premier organe 1 de mesure peut être par exemple un capteur de mesure sur la borne 10 de connexion commune. Dans un autre mode de réalisation, le premier organe 1 de mesure peut utiliser un calculateur additionnant des mesures ou des déterminations des puissances actives individuelles, effectuées par des organes de mesure (capteurs ou autres) ou de détermination (calculateur) faisant partie du ou des deuxièmes automates Aᵢ, sur le (ou les) conducteur 20ᵢ de sortie de chaque unité Gᵢ de génération d'électricité et/ou de chaque unité Batᵢ de stockage d'électricité vers la borne 10 de connexion.

L'automate 100 de contrôle comporte un deuxième organe 2 de mesure ou de détermination d'une tension U_{Rmes} de la borne 10 de connexion commune (pouvant être par exemple un capteur de mesure sur le conducteur 20ᵢ de sortie ou sur la borne 10 de connexion commune), à l'étape E2 effectuée par ce deuxième organe 2. Cette tension U_{Rmes} de la borne 10 de connexion commune est donc la tension U_{Rmes} du (ou des) conducteur 20ᵢ de sortie de chaque unité Gᵢ de génération d'électricité et/ou de chaque unité Batᵢ de stockage d'électricité.

L'automate 100 de contrôle comporte un troisième organe 3 de calcul (par exemple par un calculateur) d'une référence U_{centraleRef} de tension de la borne 10 de connexion commune selon une première fonction prescrite f dépendant au moins de la puissance active totale P_{centrale} (étape E3 effectuée par ce troisième organe 3).

Chaque deuxième automate Aᵢ de contrôle comporte comporte un quatrième organe 4ᵢ de mesure ou de détermination d'une puissance réactive individuelle Qₘₑₛ₍ᵢ₎ fournie ou absorbée par l'unité (Gᵢ) de génération d'électricité associée à ce deuxième automate (Aᵢ) et/ou l'unité (Batᵢ) de stockage d'électricité associée à ce deuxième automate (Aᵢ) vers la borne 10 de connexion commune (étape E4 effectuée par ce quatrième organe 4). Dans un mode de réalisation, le quatrième organe 4ᵢ de mesure peut être par exemple un capteur de mesure sur le conducteur 20ᵢ de sortie de chaque unité Gᵢ de génération d'électricité et/ou de chaque unité Batᵢ de stockage d'électricité vers la borne 10 de connexion.

L'automate 100 de contrôle comporte un premier correcteur 5 de tension, ayant une deuxième fonction de transfert prescrite corr. L'automate 100 de contrôle est configuré pour calculer (étape E5) ${U}_{centraleRef} = f \left({P}_{centrale}\right)$ ${U}_{offset} = corr \left({U}_{centraleRef}-{U}_{Rmes}\right)$ où U_{offset} est une première tension de décalage centrale, calculée en appliquant la deuxième fonction de transfert prescrite corr du premier correcteur à la différence U_{centrateRef} - U_{Rmes}. L'automate 100 de contrôle est configuré pour calculer au moins une deuxième tension de décalage U_{Offset(i)} selon une troisième fonction prescrite gᵢ dépendant de la première tension de décalage centrale U_{offse}. L'automate 100 de contrôle est configuré pour transmettre la (ou les) deuxième tension de décalage U_{offset(i)} au(x) deuxième(s) automate(s) Aᵢ de contrôle pour l'unité Gᵢ de génération d'électricité associée à ce deuxième automate Aᵢ et/ou pour l'unité Batᵢ de stockage d'électricité associée à ce deuxième automate Aᵢ.

Le premier automate 100 de contrôle central calcule (étape E6) et transmet (étape E6) à chaque deuxième automate Aᵢ de contrôle la tension U_{offset(i)} de décalage de chaque unité Gᵢ de génération d'électricité et/ou de chaque unité Batᵢ de stockage d'électricité associée à ce deuxième automate Aᵢ de contrôle, afin que la tension de la borne 10 de connexion commune soit réglée à la référence U_{centraleRef} de tension.

Le (ou les) deuxième(s) automate(s) Aᵢ de contrôle est configuré pour calculer (étape E7) la (ou les) tension U_{ref(i)} de consigne locale pour l'unité Gᵢ de génération d'électricité associée à ce deuxième automate Aᵢ et/ou pour l'unité Batᵢ)de stockage d'électricité associée à ce deuxième automate (Aᵢ), selon U_{ref(i)} = U_{offset(i)} - K_{UQ(i)}.Qₘₑₛ₍ᵢ₎
où K_{UQ(i)} est un coefficient prescrit, non nul.

Suivant un mode de réalisation de l'invention, chaque coefficient K_{UQ(i)} représente une fonction de partage de la première puissance réactive totale Qₘₑₛ et peut correspondre au ratio de la puissance réactive individuelle Qₘₑₛ₍ᵢ₎ d'une unité Gᵢ de génération d'électricité ou Batᵢ de stockage d'électricité par rapport à la première puissance réactive totale Qₘₑₛ, cette fonction de partage étant implémentée dans le (ou les) deuxième automate Aᵢ de contrôle. Cette fonction de partage de la première puissance réactive totale Qₘₑₛ est associée à la régulation de la tension interne de chaque unité Gᵢ de génération d'électricité et/ou de chaque unité Batᵢ de stockage d'électricité, effectué par le deuxième automate Aᵢ de contrôle associé à cette unité.

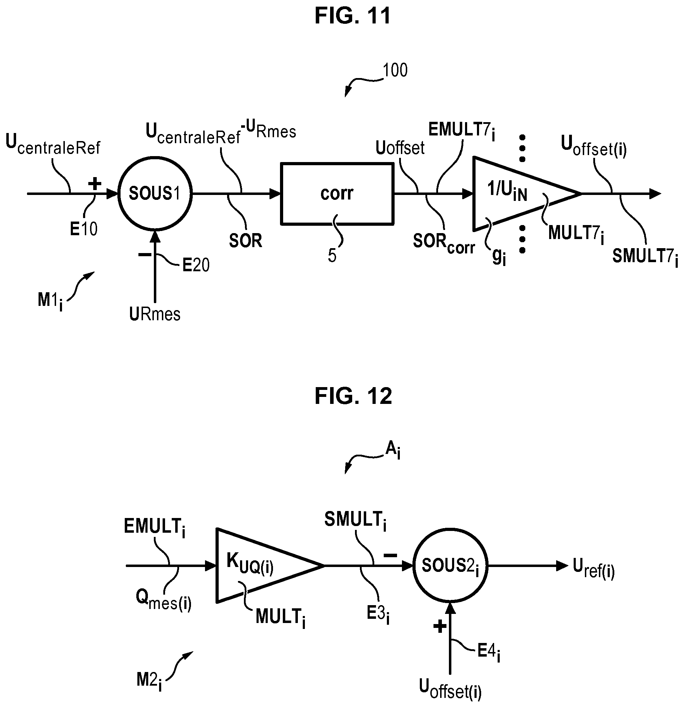

La présente invention permet d'adapter le fonctionnement du réglage secondaire de tension centralisé présenté à la figure 11 afin de minimiser les écarts de tension sur l'ensemble des nœuds du microréseau MR, notamment les nœuds N₁₁, N₁₂ de connexion des sources Sₖ, Sₖ₊₁ de production d'électricité distribuées et les nœuds N₁₃, N₁₄, N₁₅ de connexion des postes consommateurs PCₗ, PCₗ₊₁, PCₗ₊₂ d'électricité distribués, par rapport à la tension nominale. La référence U_{centraleRef} de tension du réglage secondaire est modulée en fonction de la puissance active totale P_{centrale} et/ou de la première puissance réactive totale Qₘₑₛ injectée par la centrale C sur le microréseau MR.

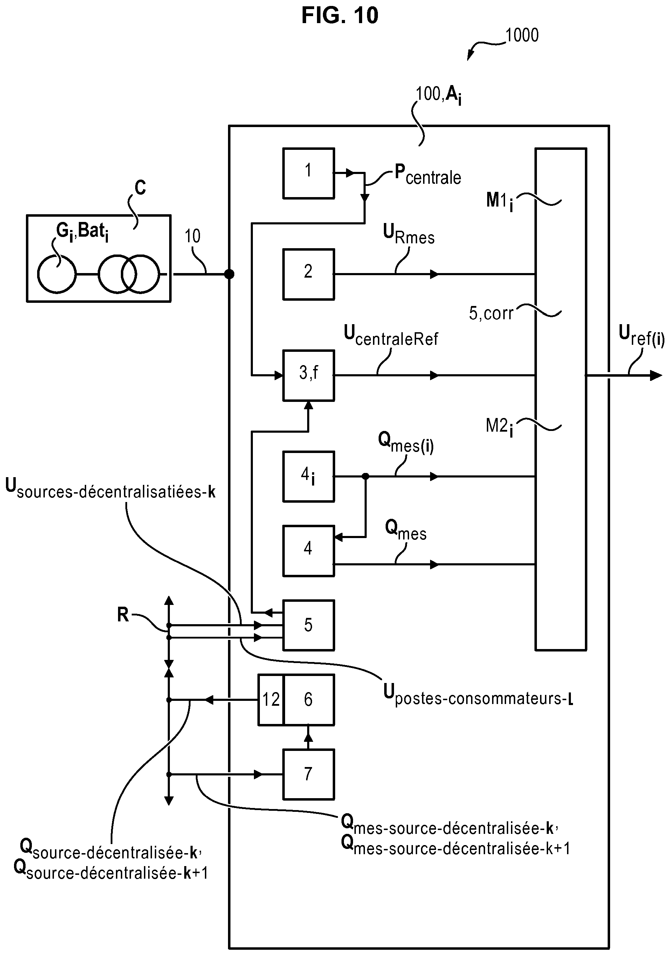

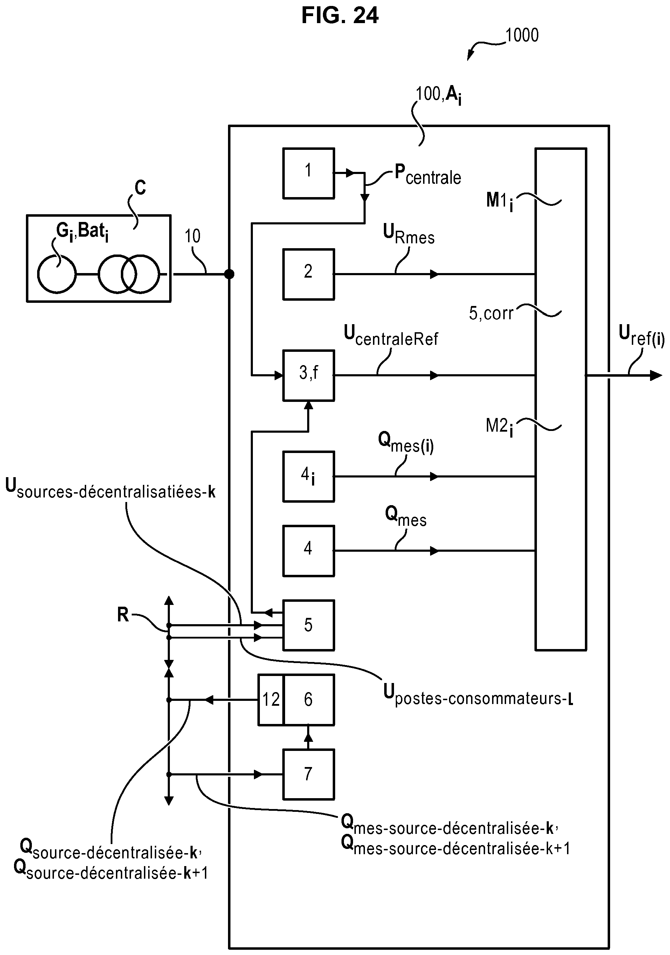

Dans des modes de réalisation de l'invention, représentés aux figures 10 et 24, le premier automate 100 de contrôle central comporte un autre organe 4 de mesure ou de détermination de la première puissance réactive totale Qₘₑₛ sortant de la centrale C, fournie ou absorbée par l'unité Gᵢ de génération d'électricité et/ou l'unité Batᵢ de stockage d'électricité.

Dans un mode de réalisation de l'invention, représenté à la figure 10, l'organe 4 de mesure peut utiliser un calculateur additionnant des mesures ou des déterminations des puissances réactives individuelles Qₘₑₛ₍ᵢ₎, qui ont été effectuées par les organes 4ᵢ de mesure (capteurs ou autres) ou de détermination (calculateur) faisant partie du ou des deuxièmes automates Aᵢ, sur le (ou les) conducteur 20ᵢ de sortie de chaque unité Gᵢ de génération d'électricité et/ou de chaque unité Batᵢ de stockage d'électricité vers la borne 10 de connexion.

Dans un mode de réalisation de l'invention, représenté à la figure 24, le premier automate 100 de contrôle central comporte, comme autre organe 4, un autre organe 4 de mesure de la première puissance réactive totale Qₘₑₛ sortant de la centrale, fournie ou absorbée par l'unité Gᵢ de génération d'électricité et/ou l'unité Batᵢ de stockage d'électricité sur la borne 10 de connexion commune.

L'automate 100, le premier module M1ᵢ de calcul et le deuxième module M2ᵢ de calcul, les organes, les correcteurs, filtres, limiteurs et autres éléments décrits ci-dessous, peuvent être réalisés par tous moyens de calcul, pouvant comporter un calculateur, un ordinateur, un ou plusieurs processeurs, un circuit de calcul, un programme d'ordinateur ou autres. L'invention concerne également un programme d'ordinateur comportant des instructions de code pour la mise en œuvre du procédé de contrôle d'au moins une unité Gᵢ de génération d'électricité et/ou d'au moins une unité Batᵢ de stockage d'électricité, lorsqu'il est exécuté par l'automate 100 de contrôle. Les éléments décrits ci-dessous peuvent mettent œuvre d'autres étapes du procédé de contrôle, décrites ci-dessous.

Un objet de l'invention est un programme d'ordinateur comportant des instructions de code pour la mise en œuvre d'un procédé de contrôle d'une centrale (C ), laquelle comporte au moins une unité (Gᵢ) de génération d'électricité et/ou au moins une unité (Batᵢ) de stockage d'électricité, et au moins une borne (10) de connexion commune, qui est reliée à l'unité (Gᵢ) de génération d'électricité et/ou l'unité (Batᵢ) de stockage d'électricité et qui est destinée à être connectée à au moins une ligne (D₁, D₂, D_{N}) d'un microréseau (MR) de consommation et/ou de production d'électricité,
procédé dans lequel un automate (100) de contrôle central de l'unité (Gᵢ) de génération d'électricité et/ou de l'unité (Batᵢ) de stockage d'électricité calcule (E5) et transmet au moins une tension U_{offset(i)} de décalage de chaque unité (Gᵢ) de génération d'électricité et/ou de chaque unité (Batᵢ) de stockage d'électricité à au moins un deuxième automate (Aᵢ) de contrôle de chaque unité (Gᵢ) de génération d'électricité et/ou unité (Batᵢ) de stockage d'électricité, afin que la tension de la borne (10) de connexion commune soit réglée à une référence U_{centraleRef} de tension,
caractérisé en ce que
on mesure ou détermine (E1) par un premier organe (1) de mesure ou de détermination du premier automate (100) de contrôle central une puissance active totale P_{centrale} sortant de la centrale (C ), fournie ou absorbée par l'unité (Gᵢ) de génération d'électricité et/ou l'unité (Batᵢ) de stockage d'électricité,
on mesure (E2) par un deuxième organe (2) de mesure du premier automate (100) de contrôle central une tension U_{Rmes} de la borne (10) de connexion commune,
on calcule (E3) par un troisième organe (3) de calcul du premier automate (100) de contrôle central une référence U_{centraleRef} de tension de la borne (10) de connexion commune selon une première fonction prescrite f dépendant au moins de la puissance active totale P_{centrale},
on mesure ou détermine (E4) par un quatrième organe (4ᵢ) de mesure ou de détermination du deuxième automate (Aᵢ) de contrôle une première puissance réactive individuelle Qₘₑₛ(i) fournie ou absorbée par l'unité (Gᵢ) de génération d'électricité associée à ce deuxième automate (Aᵢ) et/ou par l'unité (Batᵢ) de stockage d'électricité associée à ce deuxième automate (Aᵢ) vers la borne (10) de connexion,
le premier automate (100) de contrôle central ayant un premier correcteur (5) de tension, ayant une deuxième fonction de transfert prescrite corr,
on calcule (E5) par le premier automate (100) de contrôle central ${U}_{centraleRef} = f \left({P}_{centrale}\right)$ ${U}_{offset} = corr \left({U}_{centraleRef}-{U}_{Rmes}\right)$
où U_{offset} est une première tension de décalage centrale, calculée en appliquant la deuxième fonction de transfert prescrite corr du premier correcteur à la différence U_{centraleRef} - U_{Rmes},
on calcule (E6) par le premier automate (100) de contrôle la deuxième tension de décalage U_{offset(i)} à partir de la première tension de décalage centrale U_{offset} selon une troisième fonction prescrite (gᵢ) et on transmet par le premier automate (100) de contrôle la deuxième tension de décalage U_{Offset(i)} au deuxième automate (Aᵢ) de contrôle pour l'unité (Gᵢ) de génération d'électricité associée à ce deuxième automate (Aᵢ) et/ou pour l'unité (Batᵢ) de stockage d'électricité associée à ce deuxième automate (Aᵢ),
on calcule (E7) par le deuxième automate (Aᵢ) de contrôle au moins une tension U_{ref(i)} de consigne locale pour l'unité (Gᵢ) de génération d'électricité associée à ce deuxième automate (Aᵢ) et/ou pour l'unité (Batᵢ) de stockage d'électricité associée à ce deuxième automate (Aᵢ), selon ${U}_{ref \left(i\right)} = {U}_{offset \left(i\right)} - {K}_{UQ \left(i\right)} . {Q}_{mes \left(i\right)}$
où K_{UQ(i)} est un coefficient prescrit, non nul,
le programme d'ordinateur étant exécuté par le premier automate (100) de contrôle central et par le deuxième automate (Aᵢ) de contrôle.

Les figures 11, 22 et 23 montre un exemple de réalisation d'un premier module M1 de calcul de la deuxième tension de décalage U_{offse}t₍ᵢ₎, où ce premier module M1ᵢ de calcul comporte un premier soustracteur SOUS1 comportant une première entrée additionneuse E10 recevant la référence U_{centraleRef} de tension et une deuxième entrée soustractrive E20 recevant la tension U_{Rmes} de la borne 10 de connexion commune pour fournir sur sa première sortie SOR la différence U_{centrateRef} - U_{Rmes}. La sortie SOR est reliée à la troisième entrée du correcteur 5 de la boucle de régulation de tension, lequel calcule sur sa deuxième sortie SOR_{corr} la tension de décalage U_{offset} = corr(U_{centraleRef} - U_{Rmes}). La troisième fonction prescrite gᵢ est ou comprend la division de la première tension de décalage centrale U_{offset} par une tension nominale U_{iN} prescrite de l'unité Gᵢ de génération d'électricité et/ou de l'unité Batᵢ de stockage d'électricité, par exemple pour avoir la deuxième tension de décalage U_{offset(i)} égale ou proportionnelle à U_{offset(i)} = U_{offset} / U_{iN}. La deuxième sortie SOR_{corr} est reliée à la vingt-quatrième entrée EMULT7ᵢ d'un septième multiplicateur MULT7ᵢ multipliant la première tension de décalage centrale U_{offset} par l'inverse de la tension nominale U_{iN} prescrite pour fournir sur une dix-neuvième sortie S MULT7ᵢ du septième multiplicateur MULT7ᵢ cette deuxième tension de décalage U_{Offset(i)}.

La figure 12 montre un exemple de réalisation d'un deuxième module M2ᵢ de calcul de la tension U_{ref(i)} de consigne, où ce deuxième module M2ᵢ de calcul comporte un premier multiplicateur MULTᵢ comportant une quatrième entrée EMULTᵢ recevant la puissance réactive individuelle Qₘₑₛ₍ᵢ₎ et fournissant sur sa troisième sortie SMULTᵢ le produit du coefficient prescrit K_{UQ(i)} par la puissance réactive individuelle Qₘₑₛ₍ᵢ₎. La sortie SMULTᵢ est reliée à une cinquième entrée soustractrive E3ᵢ d'un deuxième soustracteur SOUS2ᵢ, dont une sixième entrée additionneuse E4ᵢ reçoit la deuxième tension de décalage U_{Offset(i)} et dont la quatrième sortie SORₛₒᵤₛ₂ᵢ fournit la tension U_{ref(i)} de consigne égale à la différence U_{offset(i)} - K_{UQ(i)}.Qₘₑₛ₍ᵢ₎.

Ainsi, U_{offset(i)} est la tension de référence lorsque l'unité Gᵢ de génération d'électricité et/ou l'unité Batᵢ de stockage d'électricité ne fournit, ni n'absorbe aucune puissance réactive (cas où Qₘₑₛ₍ᵢ₎ = 0).

Suivant un mode de réalisation de l'invention, la première fonction prescrite f de l'automate 100 dépend au moins :
- de la puissance active totale P_{centrale} sortant de la centrale C, fournie ou absorbée par l'unité Gᵢ de génération d'électricité et/ou l'unité Batᵢ de stockage d'électricité sur la borne 10 de connexion commune,
- et de la première puissance réactive totale Qₘₑₛ sortant de la centrale C, fournie ou absorbée par l'unité Gᵢ de génération d'électricité et/ou l'unité Batᵢ de stockage d'électricité sur la borne 10 de connexion commune, selon ${U}_{centraleRef} = f \left({P}_{centrale}, {Q}_{mes}\right) .$

Suivant un mode de réalisation de l'invention, la première fonction prescrite f est affine ou linéaire et dépend :
- de la puissance active totale P_{centrale} sortant de la centrale C, fournie ou absorbée par l'unité Gᵢ de génération d'électricité et/ou l'unité Batᵢ de stockage d'électricité sur la borne 10 de connexion commune, selon ${U}_{centraleRef} = {K}_{P} . {P}_{centrale} + {U}_{0} ,$
   où K_{P} est un deuxième coefficient prescrit non nul,
   U₀ est un troisième coefficient prescrit.

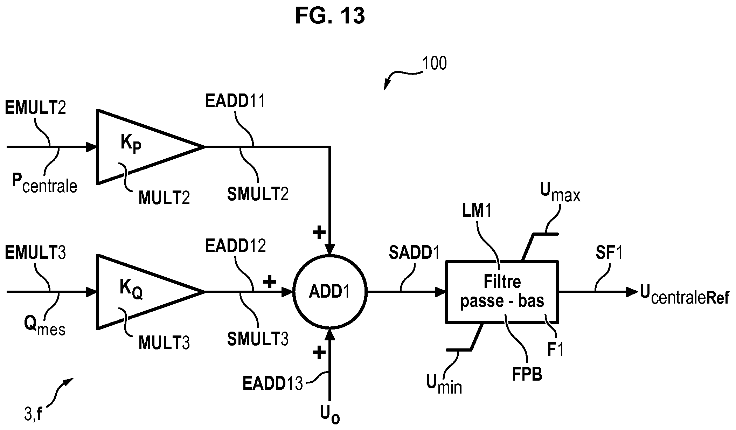

Suivant un mode de réalisation de l'invention, la première fonction prescrite f est affine ou linéaire et dépend :
- de la puissance active totale P_{centrale} sortant de la centrale C, fournie ou absorbée par l'unité Gᵢ de génération d'électricité et/ou l'unité Batᵢ de stockage d'électricité sur la borne 10 de connexion commune,
- et de la première puissance réactive totale Qₘₑₛ sortant de la centrale C, fournie ou absorbée par l'unité Gᵢ de génération d'électricité et/ou l'unité Batᵢ de stockage d'électricité sur la borne 10 de connexion commune, selon ${U}_{centraleRef} = {K}_{P} . {P}_{centrale} + {K}_{Q} . {Q}_{mes} + {U}_{0} ,$
   où K_{P} est un deuxième coefficient prescrit non nul,
   U₀ est un troisième coefficient prescrit,
   K_{Q} est un quatrième coefficient prescrit non nul, ainsi que cela est représenté à titre d'exemple à la figure 13.

Dans l'exemple de réalisation des figures 13, 22 et 23, le troisième organe 3 de calcul comporte un deuxième multiplicateur MULT2 comportant une septième entrée EMULT2 recevant la puissance active P_{centrale} et fournissant sur sa cinquième sortie SMULT2 le produit du deuxième coefficient prescrit K_{P} par la puissance active P_{centrale}. Le troisième organe 3 de calcul comporte un troisième multiplicateur MULT3 comportant une huitième entrée EMULT3 recevant la puissance réactive Qₘₑₛ et fournissant sur sa sixième sortie SMULT3 le produit du quatrième coefficient prescrit K_{Q} par la puissance réactive Qₘₑₛ. Le troisième organe 3 de calcul comporte un premier additionneur ADD1 comportant une neuvième entrée additionneuse EADD11 reliée à la cinquième sortie SMULT2, une dixième entrée additionneuse EADD12 reliée à la huitième entrée EMULT3, une onzième entrée EADD13 recevant le troisième coefficient prescrit U₀, et une septième sortie SADD1 fournissant K_{P.}P_{centrale} + K_{Q}.Qₘₑₛ + U₀. Le troisième organe 3 de calcul comporte un premier organe de filtrage F1 comportant une douzième entrée EF1 reliée à la septième sortie SADD1. L'organe de filtrage F1 peut comporter un premier limiteur LIM1 limitant sur la huitième sortie SF1 de l'organe de filtrage F1 les valeurs K_{P}.P_{centrale} + K_{Q}.Qₘₑₛ + U₀ à des valeurs, qui sont supérieures ou égales à une valeur minimale Uₘᵢₙ de tension strictement positive, prescrite et qui sont inférieures ou égales à une valeur maximale Uₘₐₓ de tension strictement positive, prescrite, comme référence U_{centraleRef} de tension. La valeur maximale Uₘₐₓ de tension strictement positive est supérieure à la valeur minimale Uₘᵢₙ de tension strictement positive. L'organe de filtrage F1 peut comporter un premier filtre passe-bas FPB1 fournissant les valeurs K_{P}.P_{centrale} + K_{Q}.Qₘₑₛ + U₀ filtrées par une première fonction de filtrage passe-bas prescrite sur la huitième sortie SF1 de l'organe de filtrage F1 comme référence U_{centraleRef} de tension. L'organe de filtrage F1 peut comporter à la fois le premier limiteur LIM1 et le premier filtre passe-bas FPB1 pour fournir sur la huitième sortie SF1 de l'organe de filtrage F1 les valeurs Kₚ.P_{centrale} + K_{Q}.Qₘₑₛ + U₀ à la fois limitées par le premier limiteur LIM1 et filtrées par le premier filtre passe-bas FPB1 sur la huitième sortie SF1 du premier limiteur LIM1 comme référence U_{centraleRef} de tension.

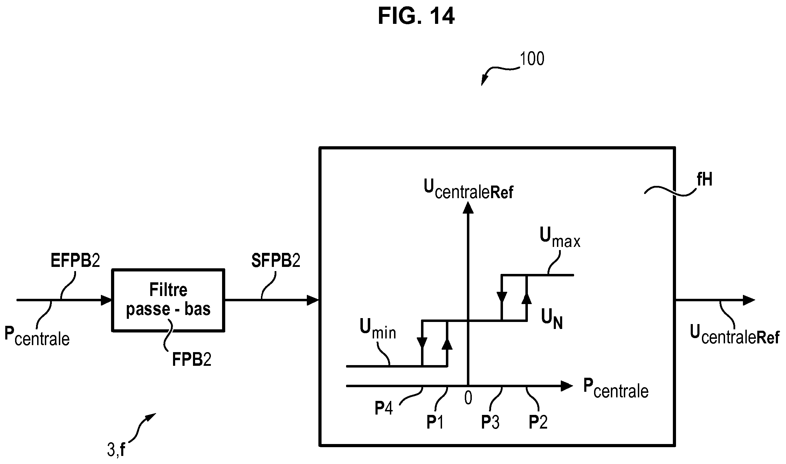

Suivant un mode de réalisation de l'invention, aux figures 14, 22 et 23, la première fonction prescrite f comprend une fonction hystérésis fH ayant trois paliers différents de référence U_{centraleRef} de tension (à savoir soit la valeur minimale prescrite Uₘᵢₙ de tension, soit la valeur maximale prescrite Uₘₐₓ de tension, soit la valeur nominale U_{N} de tension prescrite, laquelle est supérieure à la valeur minimale prescrite Uₘᵢₙ de tension et est inférieure à la valeur maximale prescrite Uₘₐₓ) de tension, selon les valeurs croissantes ou décroissantes de la puissance active totale P_{centrale} sortant de la centrale C, fournie ou absorbée par l'unité Gᵢ de génération d'électricité et/ou l'unité Batᵢ de stockage d'électricité sur la borne 10 de connexion commune. La fonction hystérésis fH est utile par exemple si les coefficients de la fonction linéaire ou affine décrite ci-dessus n'ont pas pu être déterminés ou si les performances ne sont pas satisfaisantes.

Suivant la fonction hystérésis fH, lorsque les valeurs de la puissance active totale P_{centrale} augmentent au cours du temps et deviennent supérieures ou égales à une première valeur strictement négative prescrite P₁ de puissance active en restant inférieures à une deuxième valeur strictement positive prescrite P₂ de puissance active, la référence U_{centraleRef} de tension prend la valeur nominale U_{N} de tension strictement positive et prescrite (premier cas).

Suivant la fonction hystérésis fH, tant que les valeurs de la puissance active totale P_{centrale} augmentent au cours du temps et restent inférieures à la première valeur strictement négative prescrite P₁ de puissance, la référence U_{centraleRef} de tension prend la valeur minimale Uₘᵢₙ de tension strictement positive et prescrite (deuxième cas).

Suivant la fonction hystérésis fH, lorsque les valeurs de la puissance active totale P_{centrale} augmentent au cours du temps et sont supérieures à la deuxième valeur strictement positive prescrite P₂ de puissance active, la référence U_{centraleRef} de tension prend la valeur maximale Uₘₐₓ de tension strictement positive et prescrite (troisième cas).

Suivant la fonction hystérésis fH, lorsque les valeurs de la puissance active totale P_{centrale} diminuent au cours du temps et deviennent inférieures ou égales à une troisième valeur strictement négative prescrite P₃ de puissance active en restant supérieures à une quatrième valeur P₄ strictement positive prescrite de puissance active, la référence U_{centraleRef} de tension prend la valeur nominale U_{N} de tension strictement positive et prescrite (quatrième cas). Le premier cas et le quatrième cas correspondent par exemple au fait que lorsque l'injection ou l'absorption de puissance active totale P_{centrale} est faible, la chute ou l'élévation de tension sur le microréseau MR restera limitée et la tension secondaire U_{centraleRef} sera maintenue à sa valeur nominale Uₙ.

Suivant la fonction hystérésis fH, lorsque les valeurs de la puissance active totale P_{centrale} diminuent au cours du temps et sont inférieures à la quatrième valeur P₄ strictement positive prescrite de puissance active, la référence U_{centraleRef} de tension prend la valeur minimale Uₘᵢₙ de tension strictement positive et prescrite (cinquième cas). Le deuxième cas et le cinquième cas correspondent par exemple au fait que lorsque l'absorption de puissance active totale P_{centrale} est importante, c'est-à-dire en cas de forte production des sources distribuées Sₖ, Sₖ₊₁, la référence de tension secondaire U_{centraleRef} sera la valeur basse Uₘᵢₙ.

Suivant la fonction hystérésis fH, tant que les valeurs de la puissance active totale P_{centrale} diminuent au cours du temps et restent supérieures à la troisième valeur strictement positive prescrite P₃ de puissance active, la référence U_{centraleRef} de tension prend la valeur maximale Uₘₐₓ de tension strictement positive et prescrite (sixième cas). Le troisième cas et le sixième cas correspondent par exemple au fait que lorsque l'injection de puissance active totale P_{centrale} est importante, typiquement lors de la pointe de consommation journalière des postes consommateurs PCₗ, PCₗ₊₁, PCₗ₊₂ d'électricité distribués, la référence de tension secondaire U_{centraleRef} sera la valeur haute Uₘₐₓ.

Suivant un mode de réalisation de l'invention, la troisième valeur strictement positive prescrite P₃ de puissance active est inférieure à la deuxième valeur strictement positive prescrite P₂ de puissance active.

Suivant un mode de réalisation de l'invention, la quatrième valeur strictement négative prescrite P₄ de puissance active étant inférieure à la première valeur strictement négative prescrite P₁ de puissance active.

Suivant un mode de réalisation de l'invention, aux figures 14, 22 et 23, le troisième organe 3 de calcul comporte un deuxième filtre passe-bas FPB2 comportant une treizième entrée EFPB2 recevant la puissance active totale P_{centrale} et fournissant sur sa neuvième sortie SFPB2 la puissance active totale P_{centrale} filtrée par une deuxième fonction de filtrage passe-bas prescrite. La neuvième sortie SFPB2 est reliée à la fonction hystérésis fH laquelle reçoit au lieu de la puissance active totale P_{centrale} la puissance active totale P_{centrale} ayant été filtrée par une deuxième fonction de filtrage passe-bas prescrite du deuxième filtre passe-bas FPB2.

Suivant un mode de réalisation de l'invention, aux figures 10, 22, 23 et 24, l'automate 100 de contrôle comporte en outre au moins un cinquième organe 5 de réception pour recevoir :
- des premières valeurs U_{sources-décentralisées-k} de télémesure de tension respectivement de sources Sₖ, Sₖ₊₁ de production d'électricité décentralisées (ou distribuées) de la ligne D₁, D₂,.., D_{N} du microréseau MR de consommation et/ou de production d'électricité, distantes d'au moins une distance non nulle (nœuds de connexion N₁₁, N₁₂) les unes par rapport aux autres et par rapport à la borne 10 de connexion commune de la centrale C,
- des deuxièmes valeurs U_{postes-consommateurs-l} de télémesure de tension respectivement de postes consommateurs PCₗ, PCₗ₊₁, PCₗ₊₂ d'électricité décentralisés (ou distribués) de la ligne D₁, D₂,.., D_{N} du microréseau MR de consommation et/ou de production d'électricité, distants d'au moins une distance non nulle (nœuds de connexion N₁₃, N₁₄, N₁₅) les uns par rapport aux autres et par rapport à la borne 10 de connexion commune de la centrale C.

Suivant un mode de réalisation de l'invention, aux figures 9, 10, 22, 23 et 24, les sources Sₖ, Sₖ₊₁ de production d'électricité décentralisées peuvent chacune être munies d'un septième organe 7ₖ, 7ₖ₊₁ de mesure (par exemple capteur de mesure) ou de détermination de leur première valeur U_{sources-décentralisées-k} de télémesure de tension respective et d'un huitième organe 8ₖ, 8ₖ₊₁ de télécommunication (par exemple transmetteur) pour transmettre par un réseau de télécommunication R ces premières valeurs U_{sources-décentralisées-k} de télémesure de tension au cinquième organe 5 de réception (qui est par exemple un récepteur de télécommunication).

Suivant un mode de réalisation de l'invention, aux figures 9, 10, 22, 23 et 24, les postes consommateurs PCₗ, PCₗ₊₁, PCₗ₊₂ d'électricité décentralisés peuvent chacun être munis d'un neuvième organe 9ₗ, 9ₗ₊₁ 9ₗ₊₂ de mesure (par exemple capteur de mesure) ou de détermination de leur deuxième valeur U_{postes-consommateurs-l} de télémesure de tension respective et d'un dixième organe 10ₗ, 10ₗ₊₁, 10ₗ₊₂ de télécommunication (par exemple transmetteur) pour transmettre par un réseau de télécommunication R ces deuxièmes valeurs U_{postes-consommateurs-l} de télémesure de tension au cinquième organe 5 de réception.

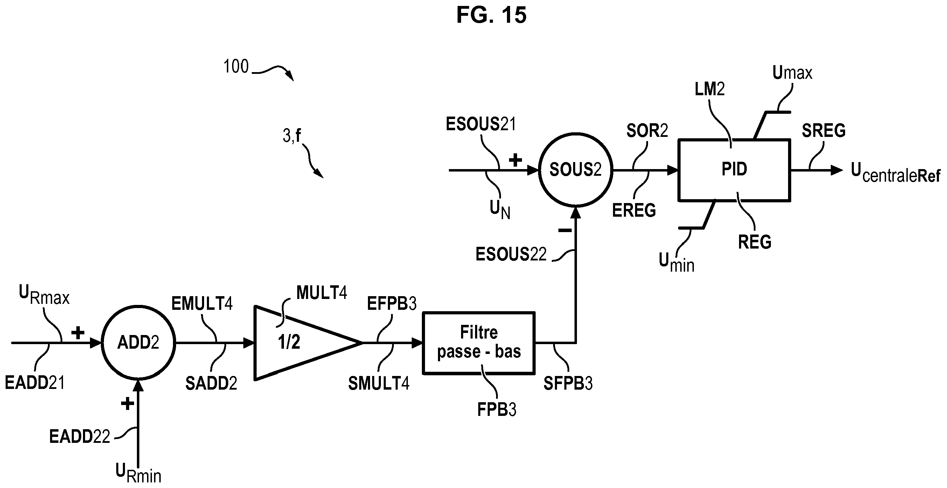

Suivant un mode de réalisation de l'invention, aux figures 15, 22 et 23, la première fonction prescrite f comporte :
- le calcul d'un maximum U_{Rmax} de tension entre la tension U_{Rmes} de la borne (10) de connexion commune de la centrale C et les premières valeurs U_{sources-décentralisées-k} de télémesure de tension des sources Sₖ, Sₖ₊₁ de production d'électricité décentralisées, c'est-à-dire${U}_{Rmax} = max \left({U}_{Rmes}{, U}_{sources - décentralisées - k}\right) ,$
- le calcul d'un minimum U_{Rmin} de tension entre la tension U_{Rmes} de la borne (10) de connexion commune de la centrale et les deuxièmes valeurs U_{postes-consommateurs-l} de télémesure de tension des postes consommateurs PCₗ, PCₗ₊₁, PCₗ₊₂ d'électricité décentralisés, c'est-à-dire${U}_{Rmin} = min \left({U}_{Rmes}{, U}_{postes - consommateurs - l}\right) ,$
- la prise en compte de la demi-somme du maximum U_{Rmax} de tension et du minimum U_{Rmin} de tension pour le calcul de la référence U_{centraleRef} de tension.

Cela permet de tenir compte des tensions les plus basses et les plus élevées des sources distribuées Sₖ, Sₖ₊₁ et des postes consommateurs distribués PCₗ, PCₗ₊₁, PCₗ₊₂ pour calculer la référence U_{centraleRef} de tension optimale. En effet, la tension maximale U_{Rmax} sur le microréseau correspond nécessairement à celle d'une source distribuée fournissant de la puissance active d'après les équations du premier type mentionnées ci-dessus. La tension minimale U_{Rmin} sur le microréseau correspond nécessairement à celle d'un poste consommateur distribué absorbant de la puissance active d'après les équations du premier type mentionnées ci-dessus. Cette fonction, qui correspond à une boucle externe de régulation pour le réglage secondaire, a pour objectif de centrer la tension du microréseau MR à sa valeur nominale U_{N}. En effet, lorsque le deuxième correcteur PID REG a annulé l'erreur statique de cette boucle externe, la référence U_{centraleRef} de tension permet d'obtenir $\frac{{U}_{Rmax} + {U}_{Rmin}}{2} = {U}_{N}$

Suivant un mode de réalisation de l'invention, aux figures 15, 22 et 23, le troisième organe 3 de calcul comporte un deuxième additionneur ADD2 comportant une quatorzième entrée additionneuse EADD21 recevant le maximum U_{Rmax} de tension, une quinzième entrée additionneuse EADD22 recevant le minimum U_{Rmin} de tension, et une dixième sortie SADD2 fournissant la somme du maximum U_{Rmax} de tension et du minimum U_{Rmin} de tension. Le troisième organe 3 de calcul comporte un quatrième multiplicateur MULT4 comportant une seizième entrée EMULT4 reliée à la dixième sortie SADD2 et fournissant sur sa onzième sortie SMULT4 la demi-somme du maximum U_{Rmax} de tension et du minimum U_{Rmin} de tension.

Suivant un mode de réalisation de l'invention, aux figures 15, 22 et 23, le troisième organe 3 de calcul comporte un deuxième correcteur REG du type proportionnel, intégrateur et dérivateur (PID), fournissant sur sa douzième sortie SREG la référence U_{centraleRef} de tension à partir de la différence entre d'une part la tension nominale prescrite U_{N} et d'autre part la demi-somme du maximum U_{Rmax} de tension et du minimum U_{Rmin} de tension, cette différence étant appliquée à une dix-septième entrée EREG du deuxième correcteur REG.

Suivant un mode de réalisation de l'invention, aux figures 15, 22 et 23, le troisième organe 3 de calcul comporte un deuxième limiteur LIM2 limitant sur la douzième sortie SREG du deuxième correcteur REG les valeurs de la référence U_{centraleRef} de tension à des valeurs, qui sont supérieures ou égales à la valeur minimale Uₘᵢₙ de tension strictement positive, prescrite et qui sont inférieures ou égales à la valeur maximale Uₘₐₓ de tension strictement positive, prescrite.

Suivant un mode de réalisation de l'invention, aux figures 15, 22 et 23, le troisième organe 3ᵢ de calcul comporte un deuxième soustracteur SOUS2 comportant une dix-huitième entrée additionneuse ESOUS21 recevant la tension nominale prescrite U_{N} et une dix-neuvième entrée soustractrive ESOUS22 recevant la demi-somme du maximum U_{Rmax} de tension et du minimum U_{Rmin} de tension, pour fournir sur sa neuvième sortie SOR2 la différence entre d'une part la tension nominale prescrite U_{N} et d'autre part la demi-somme du maximum U_{Rmax} de tension et du minimum U_{Rmin} de tension. La neuvième sortie SOR2 est reliée à la dix-septième entrée EREG du deuxième correcteur REG.

Suivant un mode de réalisation de l'invention, aux figures 15, 22 et 23, le troisième organe 3 de calcul peut comporter un troisième filtre passe-bas FPB3 dont la vingtième entrée EFPB3 est reliée à la onzième sortie SMULT4 pour recevoir la demi-somme du maximum U_{Rmax} de tension et du minimum U_{Rmin} de tension. Le troisième filtre passe-bas FPB3 comporte une treizième sortie SFPB3 fournissant la demi-somme du maximum U_{Rmax} de tension et du minimum U_{Rmin} de tension, filtrée par une troisième fonction de filtrage passe-bas prescrite. La treizième sortie SFPB3 est reliée à la dix-neuvième entrée soustractrive ESOUS22.

Suivant un mode de réalisation de l'invention, aux figures 9, 10, 16, 22, 23 et 24, l'automate 100 de contrôle comporte un sixième organe 6 de calcul de consignes respectives (Q_{source}-_{décentratisée-k,} Q_{source-décentralisée-k+1} de puissance réactive pour les sources correspondantes Sₖ, Sₖ₊₁ de production d'électricité décentralisées. Ces consignes respectives Q_{source-décentralisée-k}, O_{source-décentratisée-k+1} sont des proportions rₖ, rₖ₊₁ au moins de la première puissance réactive totale Qₘₑₛ sortant de la centrale C, fournie ou absorbée par l'unité Gᵢ de génération d'électricité et/ou l'unité Batᵢ de stockage d'électricité sur la borne 10 de connexion commune (en pouvant donc ajouter d'autres puissances réactives mesurées, ainsi que décrit ci-dessous). L'automate 100 de contrôle peut comporter un douzième organe 12 de télécommunication (par exemple transmetteur) pour transmettre par un réseau de télécommunication R ces consignes respectives Q_{source-décentralisée-k}, Q_{source-décentralisée-k+1} aux sources correspondantes Sₖ, Sₖ₊₁ de production d'électricité décentralisées (pouvant avoir un treizième organe 13ₖ, 13ₖ₊₁ de réception (par exemple un récepteur de télécommunication)) recevant ces consignes respectives Q_{source-décentralisée-k}, O_{source-décentratisée-k+1} par le réseau de télécommunication R sur leur troisième automate Aₖ de contrôle. Le troisième automate Aₖ, Aₖ₊₁ de contrôle de chaque source Sₖ, Sₖ₊₁ de production d'électricité décentralisée régule la tension interne de cette source Sₖ, Sₖ₊₁ de production d'électricité décentralisée.

Suivant un mode de réalisation de l'invention, aux figures 9, 10, 16, 22, 23 et 24, l'automate 100 de contrôle comporte un septième organe 7 de réception pour recevoir des troisièmes valeurs respectives Q_{mes-source-décentralisée-k}, Q_{mes-source-décentralisée-k+1} de télémesure de puissance réactive des sources respectives Sₖ, Sₖ₊₁ de production d'électricité décentralisées. Le sixième organe 6 de calcul est configuré pour calculer une deuxième puissance réactive totale Q_{microréseau} égale à la somme algébrique SPR de la première puissance réactive totale Qₘₑₛ sortant de la centrale C, fournie ou absorbée par l'unité Gᵢ de génération d'électricité et/ou l'unité Batᵢ de stockage d'électricité sur la borne 10 de connexion et des troisièmes valeurs respectives Q_{mes-source-décentralisée-ky}, O_{mes-source-décentratisée-k+1} de télémesure de puissance réactive (absorbée ou injectée) des sources respectives Sₖ, Sₖ₊₁ de production d'électricité distribuées. Le sixième organe 6 de calcul est configuré pour calculer les consignes respectives (Q_{source- décentratisée-k}, Q_{source-décentralisée-k+1} de puissance réactive des sources respectives Sₖ, Sₖ₊₁ de production d'électricité décentralisées comme étant des proportions rₖ, rₖ₊₁ de ladite somme SPR, Q_{microréseau} c'est-à-dire ${Q}_{source - décentralisée - k} = {r}_{k} . {Q}_{microréseau} ,$ ${Q}_{source - décentralisée - k + 1} = {r}_{k + 1} . {Q}_{microréseau} ,$
avec 0 ≤ rₖ.≤ 1,
0 ≤ rₖ₊₁.≤ 1,
et la somme des rₖ, rₖ₊₁ étant égale à 1.
Cela permet ainsi la participation des sources de production d'électricité distribuées Sₖ, Sₖ₊₁à la fourniture de puissance réactive d'une manière efficace. Par défaut, l'intégralité de la puissance réactive Oₘₑₛ₍ᵢ₎ sera fournie ou absorbée par l'unité Gᵢ de génération d'électricité et/ou de l'unité Batᵢ de stockage d'électricité.

Suivant un mode de réalisation de l'invention, aux figures 9 et 10, 22, 23 et 24, les sources Sₖ, Sₖ₊₁ de production d'électricité décentralisées peuvent chacune être munies d'un onzième organe 11ₖ, 11ₖ₊₁ de mesure (par exemple capteur de mesure) ou de détermination de leur troisième valeur respective Q_{mes-source-décentralisée-k}, Q_{mes-source-décentralisée-k+1} de télémesure de puissance réactive et d'un huitième organe 8ₖ, 8ₖ₊₁ de télécommunication (par exemple transmetteur) pour transmettre par un réseau de télécommunication R ces troisièmes valeurs respectives Q_{mes-source-décentralisée-k}, C_{mes-source-décentratisée-k+1} de télémesure de puissance réactive au septième organe 7 de réception (qui a par exemple un récepteur de télécommunication).

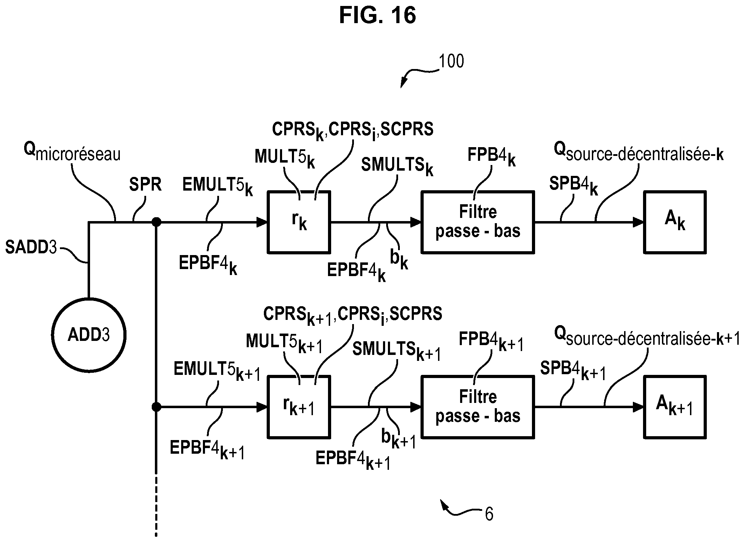

Suivant un mode de réalisation de l'invention, aux figures 16, 22 et 23, les proportions rₖ, rₖ₊₁ dans les consignes respectives Q_{source-décentralisée-k}, Q_{source-décentralisée-k+1} de puissance réactive des sources respectives Sₖ, Sₖ₊₁ de production d'électricité distribuées correspondent à des ratios respectifs rₖ, rₖ₊₁ d'une capacité prescrite respective CPRSₖ, CPRSₖ₊₁ en puissance réactive de la source respective Sₖ, Sₖ₊₁ de production d'électricité distribuée, divisée par la somme SCPRS des capacités prescrites respectives CPRSₖ, CPRSₖ₊₁ en puissance réactive des sources respectives Sₖ, Sₖ₊₁ de production d'électricité distribuées et des capacités prescrites respectives CPRS; en puissance réactive de la (ou des) unité Gᵢ de génération d'électricité et/ou de la (ou des) unité Batᵢ de stockage d'électricité, c'est-à-dire ${r}_{k} . = {CPRS}_{k} / SCPRS ,$ ${r}_{k + 1} . = {CPRS}_{k + 1} / SCPRS .$

Suivant un mode de réalisation de l'invention, aux figures 16, 22 et 23, le sixième organe 6 de calcul comporte un troisième additionneur ADD3 recevant sur ses entrées la première puissance réactive totale Qₘₑₛ sortant de la centrale C, fournie ou absorbée par l'unité Gᵢ de génération d'électricité et/ou l'unité Batᵢ de stockage d'électricité sur la borne 10 de connexion commune t les troisièmes valeurs respectives Q_{mes-source-décentralisée-k}, Q_{mes-source-décentralisée-k+1} de télémesure de puissance réactive, et comportant une quatorzième sortie SADD3 fournissant la somme algébrique SPR de la première puissance réactive totale Qₘₑₛ sortant de la centrale C, fournie ou absorbée par l'unité Gᵢ de génération d'électricité et/ou l'unité Batᵢ de stockage d'électricité sur la borne 10 de connexion commune et des troisièmes valeurs respectives Q_{mes-source-décentralisée-k}, Q_{mes-source-décentralisée-k+1} de télémesure de puissance réactive (absorbée ou injectée) des sources respectives Sₖ, Sₖ₊₁ de production d'électricité distribuées. Le sixième organe 6 de calcul comporte des branches bₖ, bₖ₊₁ respectives de calcul des consignes respectives Q_{source-décentralisée-k}, O_{source-décentralisée-k+1} de puissance réactive des sources respectives Sₖ, Sₖ₊₁ de production d'électricité distribuées. Chaque branche bₖ respective de calcul comporte un cinquième multiplicateur MULT5ₖ comportant une vingt-et-unième entrée EMULT5ₖ reliée à la quatorzième sortie SADD3 et fournissant sur sa quinzième sortie SMULT5ₖ le produit rₖ.SPR. Chaque branche bₖ₊₁ respective de calcul comporte un sixième multiplicateur MULT5ₖ₊₁ comportant une vingt-deuxième entrée EMULT5ₖ₊₁ reliée à la quatorzième sortie SADD3 et fournissant sur sa seizième sortie SMULT5ₖ₊₁ le produit rₖ₊₁.SPR. Le sixième organe 6 de calcul peut comporter un quatrième filtre passe-bas FPB4ₖ dont la vingt-deuxième entrée EFPB4ₖ est reliée à la quinzième sortie SMULT5ₖ pour recevoir le produit rₖ.SPR. Le quatrième filtre passe-bas FPB4ₖ comporte une dix-septième sortie SFPB4ₖ fournissant le produit rₖ.SPR, filtré par une quatrième fonction de filtrage passe-bas prescrite en tant que consigne respective Q_{source-décentralisée-k} de puissance réactive de la source respective Sₖ de production d'électricité distribuée. Le sixième organe 6 de calcul peut comporter un cinquième filtre passe-bas FPB4ₖ₊₁ dont la vingt-troisième entrée EFPB4ₖ₊₁ est reliée à la seizième sortie SMULT5ₖ₊₁ pour recevoir le produit rₖ₊₁.SPR. Le cinquième filtre passe-bas FPB4ₖ₊₁ comporte une dix-huitième sortie SFPB4ₖ₊₁ fournissant le produit rₖ₊₁.SPR, filtré par une cinquième fonction de filtrage passe-bas prescrite en tant que consigne respective Q_{source-décentralisée-k+1} de puissance réactive de la source respective Sₖ₊₁ de production d'électricité distribuée.

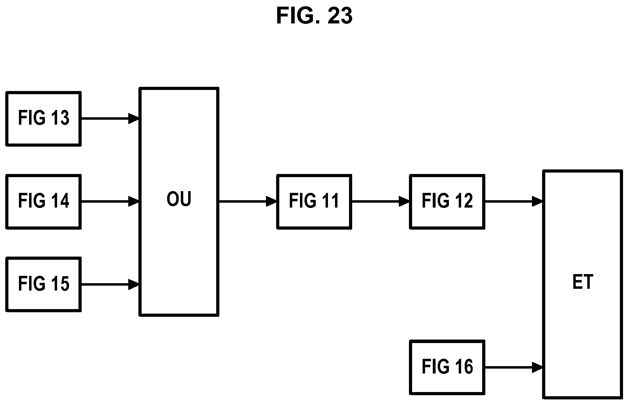

La figure 23 illustre une architecture des modes de réalisation de l'invention des figures 11 à 16, comportant le mode de réalisation de la FIG 13 ou le mode de réalisation de la FIG 14 ou le mode de réalisation de la FIG15 (fonction OU à la figure 23), combiné avec le mode de réalisation de la FIG 11, avec le mode de réalisation de la FIG 12 et avec le mode de réalisation de la FIG 16 (fonction ET à la figure 23).

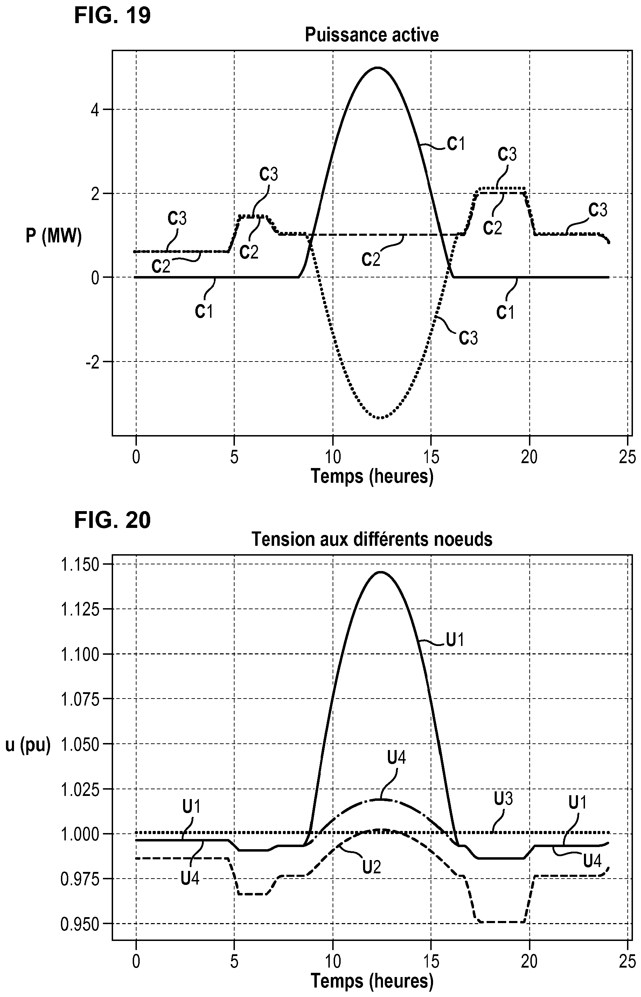

Les figures 18 à 21 illustrent une simulation numérique en valeur efficace d'un exemple de microréseau MR, dont la centrale C comporte une unité Batᵢ de stockage d'électricité formée par une batterie Batᵢ, dont le conducteur 20ᵢ de sortie est relié à la borne 10 de connexion commune, elle-même reliée par un premier tronçon D₁ₐ de 2 km de longueur de la ligne D₁ de transport d'électricité à un nœud N, lequel est relié par un deuxième tronçon D_{1b} de 10 km de longueur de la ligne D₁ de transport d'électricité à la source respective Sₖ de production d'électricité décentralisée de type photovoltaïque (PV) et est relié par un troisième tronçon D_{1c} de 5 km de longueur de la ligne D₁ de transport d'électricité au poste consommateur PCₗ d'électricité décentralisé. La tension nominale U_{N(i)} de ce microréseau MR est de 20 kV. La puissance installée de cette source respective Sₖ de production d'électricité décentralisée de type photovoltaïque (PV) est de 5 MW. La charge (Pn / cos(phin)) de ce poste consommateur PCₗ d'électricité décentralisé est de 2 MW / 0,9. Ces tronçons D₁ₐ, D_{1b}, D_{1c} de la ligne D₁ de transport d'électricité sont des câbles de type Phlox 37,7mm² (R/X) de1,176 Ohms/km / 0,399 Ohms/km. Cette batterie Batᵢ a une énergie et une puissance non limitées pendant les simulations. La figure 19 montre, au cours du temps en abscisses, le profil de la puissance active (courbe C1) de la source respective Sₖ de production d'électricité décentralisée de type photovoltaïque (PV), le profil de la puissance active (courbe C2) du poste consommateur PCₗ d'électricité décentralisé et le profil de la puissance active (courbe C3) de la batterie Batᵢ.

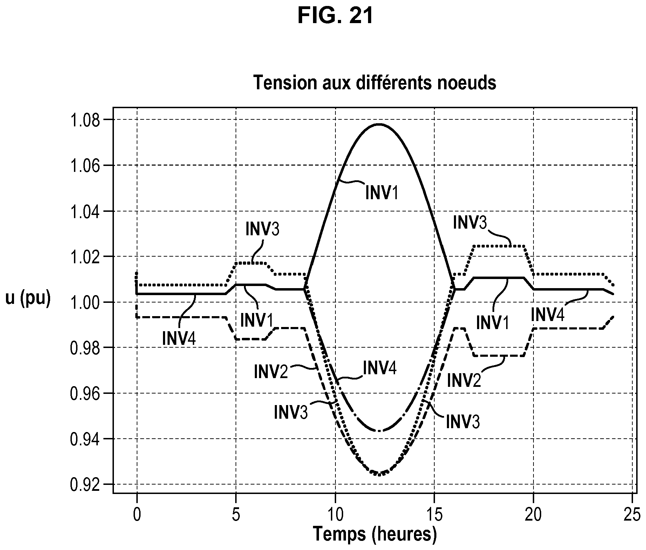

Deux scénarios ont été simulés et comparés : le premier scénario de la figure 20 dans lequel la tension de la centrale C est tenue à sa valeur nominale U_{N} par la batterie Batᵢ via un algorithme de réglage secondaire centralisé connu et le deuxième scénario de la figure 21 utilisant la présente invention dans lequel la référence de tension U_{centraleRef} du réglage secondaire est calculée via la première fonction prescrite f affine U_{centrateRef}( = K_{P}.P_{centrale}( + K_{Q}.Q_{centrale} + U₀, décrite ci-dessus, avec dans cet exemple K_{P} = 0.392 kV/MW, K_{Q} = -0.385 kV/Mvar et U₀ = 20 kV.

La figure 20 montre, au cours du temps en abscisses, la tension au nœud N₁₂ (courbe U1) de la source respective Sₖ de production d'électricité décentralisée de type photovoltaïque (PV), la tension au nœud N₁₃ (courbe U2) du poste consommateur PCₗ d'électricité décentralisé, la tension sur la borne 10 de connexion (courbe U3) de la batterie Batᵢ et la tension du nœud commun N (courbe U4) dans le premier scénario. A la figure 20, la tension en ordonnée est exprimée en valeur réduite (u(pu)) correspondant à U / 20 kV.

La figure 21 montre, au cours du temps en abscisses, la tension au nœud N₁₂ (courbe INV1) de la source respective Sₖ de production d'électricité décentralisée de type photovoltaïque (PV), la tension au nœud N₁₃ (courbe INV2) du poste consommateur PCₗ d'électricité décentralisé, la tension sur la borne 10 de connexion (courbe INV3) de la batterie Batᵢ et la tension du nœud commun N (courbe INV4) dans le premier scénario suivant l'invention. A la figure 20, la tension en ordonnée est exprimée en valeur réduite (u(pu)) correspondant à U / 20 kV.

On observe pour le premier scénario de la figure 20 que, bien que la tension de la batterie Batᵢ de la centrale C selon la courbe U3 soit idéalement tenue à sa valeur nominale U_{N}, cela n'est pas le cas pour les autres nœuds N₁₂, N₁₃, N du réseau aux courbes U1, U2 et U4. La tension de la courbe U1 du nœud N12 correspondant à la source respective Sₖ de production d'électricité décentralisée de type photovoltaïque (PV) en est le parfait exemple avec une élévation de tension proche de 15% lors de la pointe de production de cette source PV. De façon moins impressionnante mais néanmoins remarquable, la tension de la courbe U2 au nœud N₁₃ correspondant au poste consommateur PCₗ d'électricité décentralisé chute de manière significative lors de la pointe de consommation entre 17 et 19 heures.

A la figure 21, le deuxième scénario suivant l'invention quant à lui permet, conformément à l'objectif de la présente invention, de minimiser les variations de tension sur l'ensemble du réseau en modulant la tension (courbe INV3) de la centrale C comportant la batterie Batᵢ (borne 10). La tension (courbe INV3) de la centrale C comportant la batterie Batᵢ (borne 10) est abaissée significativement pour limiter l'élévation de la tension (courbe INV1) au nœud N₁₂ à environ 8%, soit presque deux fois moins que la courbe U1 dans le premier scénario, lors de la pointe de production de la source respective Sₖ de production d'électricité décentralisée de type photovoltaïque (PV) et, à l'inverse, la tension (courbe INV3) de la centrale C comportant la batterie Batᵢ (borne 10) est augmentée pour limiter la chute de tension au nœud N₁₃ lors de la pointe de consommation (courbe INV2 entre 17 et 19 heures) du poste consommateur PCₗ d'électricité décentralisé.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Dispositif de contrôle d'une centrale (C ), laquelle comporte au moins une unité (Gᵢ) de génération d'électricité et/ou au moins une unité (Batᵢ) de stockage d'électricité, et au moins une borne (10) de connexion commune, qui est reliée à l'unité (Gᵢ) de génération d'électricité et/ou l'unité (Batᵢ) de stockage d'électricité et qui est destinée à être connectée à au moins une ligne (D₁, D₂, D_{N}) d'un microréseau (MR) de consommation et/ou de production d'électricité,
le dispositif de contrôle comportant au moins un premier automate (100) de contrôle central ainsi qu'au moins un deuxième automate (Aᵢ) de contrôle pour chaque unité (Gᵢ) de génération d'électricité et/ou unité (Batᵢ) de stockage d'électricité, le deuxième automate (Aᵢ) de contrôle étant connecté au premier automate (100) de contrôle central, le premier automate (100) de contrôle central étant configuré pour calculer et transmettre au deuxième automate (Aᵢ) de contrôle au moins une tension U_{offset(i)} de décalage de chaque unité (Gᵢ) de génération d'électricité et/ou de chaque unité (Batᵢ) de stockage d'électricité, afin que la tension de la borne (10) de connexion commune soit réglée à une référence U_{centraleRef} de tension,
**caractérisé en ce que** le premier automate (100) de contrôle central comporte
un premier organe (1) de mesure ou de détermination d'une puissance active totale P_{centrale} sortant de la centrale (C ), fournie ou absorbée par l'unité (Gᵢ) de génération d'électricité et/ou l'unité (Batᵢ) de stockage d'électricité,
un deuxième organe (2) de mesure ou de détermination d'une tension U_{Rmes} de la borne (10) de connexion commune,
un troisième organe (3) de calcul de la référence U_{centraleRef} de tension de la borne (10) de connexion commune selon une première fonction prescrite f dépendant au moins de la puissance active totale P_{centrale},
chaque deuxième automate (Aᵢ) de contrôle comporte un quatrième organe (4ᵢ) de mesure ou de détermination d'une première puissance réactive individuelle Qₘₑₛ₍ᵢ₎ fournie ou absorbée par l'unité (Gᵢ) de génération d'électricité associée à ce deuxième automate (Aᵢ) et/ou l'unité (Batᵢ) de stockage d'électricité associée à ce deuxième automate (Aᵢ) vers la borne (10) de connexion, le premier automate (100) de contrôle central comporte un premier correcteur (5) de tension, ayant une deuxième fonction de transfert prescrite corr,
le premier automate (100) de contrôle étant configuré pour calculer ${U}_{centraleRef} = f \left({P}_{centrale}\right)$ ${U}_{offset} = corr \left({U}_{centraleRef}-{U}_{Rmes}\right)$
où U_{offset} est une première tension de décalage centrale, calculée en appliquant la deuxième fonction de transfert prescrite corr du premier correcteur à la différence U_{centrateRef} - U_{Rmes}, le premier automate (100) de contrôle est configuré pour calculer la deuxième tension de décalage U_{Offset(i)} selon une troisième fonction prescrite (gᵢ) à partir de la première tension de décalage centrale U_{offset} et pour transmettre la deuxième tension de décalage U_{offset(i)} au deuxième automate (Aᵢ) de contrôle pour l'unité (Gᵢ) de génération d'électricité associée à ce deuxième automate (Aᵢ) et/ou pour l'unité (Batᵢ) de stockage d'électricité associée à ce deuxième automate (Aᵢ),
le deuxième automate (Aᵢ) de contrôle est configuré pour calculer au moins une tension U_{ref(i)} de consigne locale pour l'unité (Gᵢ) de génération d'électricité associée à ce deuxième automate (Aᵢ) et/ou pour l'unité (Batᵢ) de stockage d'électricité associée à ce deuxième automate (Aᵢ), selon ${U}_{ref \left(i\right)} = {U}_{offset \left(i\right)} - {K}_{UQ \left(i\right)} . {Q}_{mes \left(i\right)}$
où K_{UQ(i)} est un coefficient prescrit, non nul.

2. Dispositif de contrôle suivant la revendication 1, **caractérisé en ce que** le premier automate (100) de contrôle central comporte un autre organe (4) de mesure ou de détermination d'une première puissance réactive totale Qₘₑₛ sortant de la centrale (C ), fournie ou absorbée par l'unité (Gᵢ) de génération d'électricité et/ou l'unité (Batᵢ) de stockage d'électricité,
la première fonction prescrite f dépend au moins :
- de la puissance active totale P_{centrale} sortant de la centrale (C ), fournie ou absorbée par l'unité (Gᵢ) de génération d'électricité et/ou l'unité (Batᵢ) de stockage d'électricité,
- et de la première puissance réactive totale Qₘₑₛ sortant de la centrale (C ), fournie ou absorbée par l'unité (Gᵢ) de génération d'électricité et/ou l'unité (Batᵢ) de stockage d'électricité.

3. Dispositif de contrôle suivant la revendication 1, **caractérisé en ce que** la première fonction prescrite f est affine ou linéaire et dépend :
- de la puissance active totale P_{centrale} sortant de la centrale (C ), fournie ou absorbée par l'unité (Gᵢ) de génération d'électricité et/ou l'unité (Batᵢ) de stockage d'électricité.

4. Dispositif de contrôle suivant la revendication 2, **caractérisé en ce que** la première fonction prescrite f est affine ou linéaire.

5. Dispositif de contrôle suivant la revendication 1 ou 2, **caractérisé en ce que** la première fonction prescrite f comprend une fonction hystérésis (fH), qui prend pour les valeurs croissantes de la puissance active totale P_{centrale} sortant de la centrale (C ), fournie ou absorbée par l'unité (Gᵢ) de génération d'électricité et/ou l'unité (Batᵢ) de stockage d'électricité:
- une valeur nominale (U_{N}) de tension strictement positive et prescrite, lorsque les valeurs croissantes de la puissance active totale P_{centrale} sortant de la centrale (C ), fournie ou absorbée par l'unité (Gᵢ) de génération d'électricité et/ou l'unité (Batᵢ) de stockage d'électricité deviennent supérieures ou égales à une première valeur strictement négative prescrite (P₁) de puissance active en restant inférieures à une deuxième valeur strictement positive prescrite (P₂) de puissance active,
- une valeur minimale (Uₘᵢₙ) de tension strictement positive et prescrite, lorsque les valeurs croissantes de la puissance active totale P_{centrale} sortant de la centrale (C ), fournie ou absorbée par l'unité (Gᵢ) de génération d'électricité et/ou l'unité (Batᵢ) de stockage d'électricité restent inférieures à la première valeur strictement négative prescrite (P₁) de puissance,
- une valeur maximale (Uₘₐₓ) de tension strictement positive et prescrite, lorsque les valeurs croissantes de la puissance active totale P_{centrale} sortant de la centrale (C ), fournie ou absorbée par l'unité (Gᵢ) de génération d'électricité et/ou l'unité (Batᵢ) de stockage d'électricité sont supérieures à la deuxième valeur strictement positive prescrite (P₂) de puissance active,
la valeur nominale (U_{N}) de tension prescrite étant supérieure à la valeur minimale prescrite (Uₘᵢₙ) de tension et étant inférieure à la valeur maximale prescrite (Uₘₐₓ) de tension,
la fonction hystérésis (fH) prenant pour les valeurs décroissantes de la puissance active totale P_{centrale} sortant de la centrale (C ), fournie ou absorbée par l'unité (Gᵢ) de génération d'électricité et/ou l'unité (Batᵢ) de stockage d'électricité:
- la valeur nominale prescrite (U_{N}) de tension strictement positive, lorsque les valeurs décroissantes de la puissance active totale P_{centrale} sortant de la centrale (C ), fournie ou absorbée par l'unité (Gᵢ) de génération d'électricité et/ou l'unité (Batᵢ) de stockage d'électricité deviennent inférieures ou égales à une troisième valeur strictement positive prescrite (P₃) de puissance active en restant supérieures à une quatrième valeur strictement négative prescrite (P₄) de puissance active,
- la valeur minimale (Uₘᵢₙ) de tension strictement positive, lorsque les valeurs décroissantes de la puissance active totale P_{centrale} sortant de la centrale (C ), fournie ou absorbée par l'unité (Gᵢ) de génération d'électricité et/ou l'unité (Batᵢ) de stockage d'électricité sont inférieures à la quatrième valeur strictement négative prescrite (P₄₍ᵢ₎) de puissance active,
- la valeur maximale (Uₘₐₓ₍ᵢ₎) de tension strictement positive, lorsque les valeurs décroissantes de la puissance active totale P_{centrale} sortant de la centrale (C ), fournie ou absorbée par l'unité (Gᵢ) de génération d'électricité et/ou l'unité (Batᵢ) de stockage d'électricité sont supérieures à la troisième valeur strictement positive prescrite (P₃) de puissance active,
la troisième valeur strictement positive prescrite (P₃) de puissance active étant inférieure à la deuxième valeur strictement positive prescrite (P₂) de puissance active,
la quatrième valeur strictement négative prescrite (P₄) de puissance active étant inférieure à la première valeur strictement négative prescrite (P₁) de puissance active.

6. Dispositif de contrôle suivant l'une quelconque des revendications précédentes, **caractérisé en ce que** le premier automate (100) de contrôle central comporte un autre organe (4) de mesure ou de détermination d'une première puissance réactive totale Qₘₑₛ sortant de la centrale (C ), fournie ou absorbée par l'unité (Gᵢ) de génération d'électricité et/ou l'unité (Batᵢ) de stockage d'électricité,
le premier automate (100) de contrôle comporte :
un sixième organe (6) de calcul de consignes respectives (Q_{source-décentralisée-k} , Q_{source-décentralisée-k+1}) de puissance réactive de sources respectives (Sₖ, Sₖ₊₁) de production d'électricité décentralisées du microréseau (MR) de consommation et/ou de production d'électricité, distantes d'au moins une distance non nulle (N₁₁, N₁₂) par rapport à la borne (10) de connexion commune, qui sont des proportions (rₖ, rₖ₊₁) au moins de la première puissance réactive totale Qₘₑₛ sortant de la centrale (C ), fournie ou absorbée par l'unité (Gᵢ) de génération d'électricité et/ou l'unité (Batᵢ) de stockage d'électricité.

7. Dispositif de contrôle suivant la revendication 6, **caractérisé en ce que** le premier automate (100) de contrôle comporte en outre au moins un septième organe (7) de réception pour recevoir :
- des troisièmes valeurs respectives (Q_{mes-source-décentralisée-k}, Q_{mes-source-décentralisée-k+1}) de télémesure de puissance réactive des sources respectives (Sₖ, Sₖ₊₁) de production d'électricité décentralisées du microréseau (MR) de consommation et/ou de production d'électricité,
le sixième organe (6) de calcul étant configuré pour calculer une deuxième puissance réactive totale (Q_{microréseau}) égale à la somme (SPR) de la première puissance réactive totale Qₘₑₛ sortant de la centrale (C ), fournie ou absorbée par l'unité (Gᵢ) de génération d'électricité et/ou l'unité (Batᵢ) de stockage d'électricité et des troisièmes valeurs respectives (Q_{mes-source-décentralisée-k,} Q_{mes-source-décentralisée-k+1}) de télémesure de puissance réactive des sources respectives (Sₖ, Sₖ₊₁) de production d'électricité décentralisées du microréseau (MR) de consommation et/ou de production d'électricité et pour calculer les consignes respectives (Q_{source-décentralisée-k} , Q_{source-décentralisée-k+1}) de puissance réactive des sources respectives (Sₖ, Sₖ₊₁) de production d'électricité décentralisées du microréseau (MR) de consommation et/ou de production d'électricité comme étant des proportions (rₖ, rₖ₊₁) de ladite somme (Q_{microréseau}, SPR).

8. Dispositif de contrôle suivant la revendication 6 ou 7, **caractérisé en ce que** lesdites proportions (rₖ, rₖ₊₁) dans les consignes respectives (Q_{source-décentralisée-k} , Q_{source-décentralisée-k+1}) de puissance réactive des sources respectives (Sₖ, Sₖ₊₁) de production d'électricité décentralisées du microréseau (MR) de consommation et/ou de production d'électricité correspondent à des ratios respectifs d'une capacité prescrite respective (CPRSₖ, CPRSₖ₊₁) en puissance réactive de la source respective (Sₖ, Sₖ₊₁) de production d'électricité décentralisée du microréseau (MR) de consommation et/ou de production d'électricité, divisée par une somme (SCPRS) des capacités prescrites respectives (CPRSₖ, CPRSₖ₊₁) en puissance réactive des sources respectives (Sₖ, Sₖ₊₁) de production d'électricité de la ligne (D₁, D₂,.., D_{N}) du microréseau (MR) de consommation et/ou de production d'électricité et des capacités prescrites respectives (CPRSᵢ) en puissance réactive de l'unité (Gᵢ) de génération d'électricité et/ou de l'unité (Batᵢ) de stockage d'électricité.

9. Dispositif de contrôle suivant l'une quelconque des revendications précédentes, **caractérisé en ce que** la troisième fonction prescrite (gᵢ) comprend la division de la première tension de décalage centrale U_{offset} par une tension nominale (U_{iN}) prescrite de l'unité (Gᵢ) de génération d'électricité et/ou de l'unité (Batᵢ) de stockage d'électricité.

10. Dispositif de contrôle suivant l'une quelconque des revendications 2, 4, 6, 7, **caractérisé en ce que** le premier automate (100) de contrôle central comporte, comme autre organe (4), un autre organe (4) de détermination de la première puissance réactive totale Qₘₑₛ sortant de la centrale (C ), fournie ou absorbée par l'unité (Gᵢ) de génération d'électricité et/ou l'unité (Batᵢ) de stockage d'électricité, en faisant la somme des premières puissances réactives individuelles Qₘₑₛ₍ᵢ₎.

11. Dispositif de contrôle suivant l'une quelconque des revendications 2, 4, 6, 7, **caractérisé en ce que** le premier automate (100) de contrôle central comporte, comme autre organe (4), un autre organe (4) de mesure de la première puissance réactive totale Qₘₑₛ sortant de la centrale (C ), fournie ou absorbée par l'unité (Gᵢ) de génération d'électricité et/ou l'unité (Batᵢ) de stockage d'électricité sur la borne (10) de connexion commune.

12. Procédé de contrôle d'une centrale (C ), laquelle comporte au moins une unité (Gᵢ) de génération d'électricité et/ouau moins une unité (Batᵢ) de stockage d'électricité, et au moins une borne (10) de connexion commune, qui est reliée à l'unité (Gᵢ) de génération d'électricité et/ou l'unité (Batᵢ) de stockage d'électricité et qui est destinée à être connectée à au moins une ligne (D₁, D₂, D_{N}) d'un microréseau (MR) de consommation et/ou de production d'électricité,
procédé dans lequel un automate (100) de contrôle central de l'unité (Gᵢ) de génération d'électricité et/ou de l'unité (Batᵢ) de stockage d'électricité calcule (E5) et transmet au moins une tension U_{offset(i)} de décalage de chaque unité (Gᵢ) de génération d'électricité et/ou de chaque unité (Batᵢ) de stockage d'électricité à au moins un deuxième automate (Aᵢ) de contrôle de chaque unité (Gᵢ) de génération d'électricité et/ou unité (Batᵢ) de stockage d'électricité, afin que la tension de la borne (10) de connexion commune soit réglée à une référence U_{centraleRef} de tension,
**caractérisé en ce que**
on mesure ou détermine (E1) par un premier organe (1) de mesure ou de détermination du premier automate (100) de contrôle central une puissance active totale P_{centrale} sortant de la centrale (C ), fournie ou absorbée par l'unité (Gᵢ) de génération d'électricité et/ou l'unité (Batᵢ) de stockage d'électricité,
on mesure (E2) par un deuxième organe (2) de mesure du premier automate (100) de contrôle central une tension U_{Rmes} de la borne (10) de connexion commune,
on calcule (E3) par un troisième organe (3) de calcul du premier automate (100) de contrôle central une référence U_{centraleRef} de tension de la borne (10) de connexion commune selon une première fonction prescrite f dépendant au moins de la puissance active totale P_{centrale},
on mesure ou détermine (E4) par un quatrième organe (4ᵢ) de mesure ou de détermination du deuxième automate (Aᵢ) de contrôle une première puissance réactive individuelle Qₘₑₛ₍ᵢ₎ fournie ou absorbée par l'unité (Gᵢ) de génération d'électricité associée à ce deuxième automate (Aᵢ) et/ou par l'unité (Batᵢ) de stockage d'électricité associée à ce deuxième automate (Aᵢ) vers la borne (10) de connexion,
le premier automate (100) de contrôle central ayant un premier correcteur (5) de tension, ayant une deuxième fonction de transfert prescrite corr,
on calcule (E5) par le premier automate (100) de contrôle central ${U}_{centraleRef} = f \left({P}_{centrale}\right)$ ${U}_{offset} = corr \left({U}_{centraleRef}-{U}_{Rmes}\right)$
où U_{offset} est une première tension de décalage centrale, calculée en appliquant la deuxième fonction de transfert prescrite corr du premier correcteur à la différence U_{centraleRef} - U_{Rmes},
on calcule (E6) par le premier automate (100) de contrôle la deuxième tension de décalage U_{offset(i)} à partir de la première tension de décalage centrale U_{offset} selon une troisième fonction prescrite (gᵢ) et on transmet par le premier automate (100) de contrôle la deuxième tension de décalage U_{offset(i)} au deuxième automate (Aᵢ) de contrôle pour l'unité (Gᵢ) de génération d'électricité associée à ce deuxième automate (Aᵢ) et/ou pour l'unité (Batᵢ) de stockage d'électricité associée à ce deuxième automate (Aᵢ),
on calcule (E7) par le deuxième automate (Aᵢ) de contrôle au moins une tension U_{ref(i)} de consigne locale pour l'unité (Gᵢ) de génération d'électricité associée à ce deuxième automate (Aᵢ) et/ou pour l'unité (Batᵢ) de stockage d'électricité associée à ce deuxième automate (Aᵢ), selon ${U}_{ref \left(i\right)} = {U}_{offset \left(i\right)} - {K}_{UQ \left(i\right)} . {Q}_{mes \left(i\right)}$
où K_{UQ(i)} est un coefficient prescrit, non nul.

13. Programme d'ordinateur comportant des instructions de code pour la mise en œuvre d'un procédé de contrôle d'une centrale (C ), laquelle comporte au moins une unité (Gᵢ) de génération d'électricité et/ou au moins une unité (Batᵢ) de stockage d'électricité, et au moins une borne (10) de connexion commune, qui est reliée à l'unité (Gᵢ) de génération d'électricité et/ou l'unité (Batᵢ) de stockage d'électricité et qui est destinée à être connectée à au moins une ligne (D₁, D₂, D_{N}) d'un microréseau (MR) de consommation et/ou de production d'électricité,
procédé dans lequel un automate (100) de contrôle central de l'unité (Gᵢ) de génération d'électricité et/ou de l'unité (Batᵢ) de stockage d'électricité calcule (E5) et transmet au moins une tension U_{offset(i)} de décalage de chaque unité (Gᵢ) de génération d'électricité et/ou de chaque unité (Batᵢ) de stockage d'électricité à au moins un deuxième automate (Aᵢ) de contrôle de chaque unité (Gᵢ) de génération d'électricité et/ou unité (Batᵢ) de stockage d'électricité, afin que la tension de la borne (10) de connexion commune soit réglée à une référence U_{centraleRef} de tension,
**caractérisé en ce que**
on mesure ou détermine (E1) par un premier organe (1) de mesure ou de détermination du premier automate (100) de contrôle central une puissance active totale P_{centrale} sortant de la centrale (C ), fournie ou absorbée par l'unité (Gᵢ) de génération d'électricité et/ou l'unité (Batᵢ) de stockage d'électricité,
on mesure (E2) par un deuxième organe (2) de mesure du premier automate (100) de contrôle central une tension U_{Rmes} de la borne (10) de connexion commune,
on calcule (E3) par un troisième organe (3) de calcul du premier automate (100) de contrôle central une référence U_{centraleRef} de tension de la borne (10) de connexion commune selon une première fonction prescrite f dépendant au moins de la puissance active totale P_{centrale},
on mesure ou détermine (E4) par un quatrième organe (4ᵢ) de mesure ou de détermination du deuxième automate (Aᵢ) de contrôle une première puissance réactive individuelle Qₘₑₛ₍ᵢ₎ fournie ou absorbée par l'unité (Gᵢ) de génération d'électricité associée à ce deuxième automate (Aᵢ) et/ou par l'unité (Batᵢ) de stockage d'électricité associée à ce deuxième automate (Aᵢ) vers la borne (10) de connexion,
le premier automate (100) de contrôle central ayant un premier correcteur (5) de tension, ayant une deuxième fonction de transfert prescrite corr,
on calcule (E5) par le premier automate (100) de contrôle central ${U}_{centraleRef} = f \left({P}_{centrale}\right)$ ${U}_{offset} = corr \left({U}_{centraleRef}-{U}_{Rmes}\right)$
où U_{offset} est une première tension de décalage centrale, calculée en appliquant la deuxième fonction de transfert prescrite corr du premier correcteur à la différence U_{centraleRef} - U_{Rmes},
on calcule (E6) par le premier automate (100) de contrôle la deuxième tension de décalage U_{offset(i)} à partir de la première tension de décalage centrale U_{offset} selon une troisième fonction prescrite (gᵢ) et on transmet par le premier automate (100) de contrôle la deuxième tension de décalage U_{offset(i)} au deuxième automate (Aᵢ) de contrôle pour l'unité (Gᵢ) de génération d'électricité associée à ce deuxième automate (Aᵢ) et/ou pour l'unité (Batᵢ) de stockage d'électricité associée à ce deuxième automate (Aᵢ),
on calcule (E7) par le deuxième automate (Aᵢ) de contrôle au moins une tension U_{ref(i)} de consigne locale pour l'unité (Gᵢ) de génération d'électricité associée à ce deuxième automate (Aᵢ) et/ou pour l'unité (Batᵢ) de stockage d'électricité associée à ce deuxième automate (Aᵢ), selon ${U}_{ref \left(i\right)} = {U}_{offset \left(i\right)} - {K}_{UQ \left(i\right)} . {Q}_{mes \left(i\right)}$
où K_{UQ(i)} est un coefficient prescrit, non nul,
le programme d'ordinateur étant exécuté par le premier automate (100) de contrôle central et par le deuxième automate (Aᵢ) de contrôle.

## Patentansprüche

1. Vorrichtung zur Steuerung eines Kraftwerks (C), das mindestens eine Stromerzeugungseinheit (Gᵢ) und/oder mindestens eine Stromspeichereinheit (Batᵢ) sowie mindestens eine gemeinsame Anschlussklemme (10) umfasst, die mit der Stromerzeugungseinheit (Gᵢ) und/oder der Stromspeichereinheit (Batᵢ) verbunden ist und die dazu bestimmt ist, an mindestens eine Leitung (D₁, D₂, D_{N}) eines Mikronetzes (MR) für den Verbrauch und/oder die Erzeugung von Strom angeschlossen zu werden,
wobei die Steuerungsvorrichtung mindestens einen zentralen ersten Controller (100) sowie mindestens einen zweiten Controller (Aᵢ) für jede Stromerzeugungseinheit (Gᵢ) und/oder Stromspeichereinheit (Batᵢ) aufweist, wobei der zweite Controller (Aᵢ) mit dem zentralen ersten Controller (100) verbunden ist, wobei der zentrale erste Controller (100) dazu konfiguriert ist, mindestens eine Offset-Spannung U_{offset(i)} jeder Stromerzeugungseinheit (Gᵢ) und/oder jeder Stromspeichereinheit (Batᵢ) zu berechnen und an den zweiten Controller (Aᵢ) zu übertragen, damit die Spannung an der gemeinsamen Anschlussklemme (10) auf eine Spannungsreferenz U_{centraleRef} eingestellt wird,
**dadurch gekennzeichnet, dass** der zentrale erste Controller (100) aufweist
ein erstes Mess- oder Bestimmungselement (1) einer Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird,
ein zweites Mess- oder Bestimmungselement (2) einer Spannung U_{Rmes} an der gemeinsamen Anschlussklemme (10),
ein drittes Element (3) zum Berechnen der Spannungsreferenz U_{centraleRef} an der gemeinsamen Anschlussklemme (10) gemäß einer ersten vorgegebenen Funktion f, die mindestens von der Gesamtwirkleistung P_{centrale} abhängt,
wobei jeder zweite Controller (Aᵢ) ein viertes Mess- oder Bestimmungselement (4ᵢ) einer ersten individuellen Blindleistung Qₘₑₛ₍ᵢ₎ aufweist, die von der diesem zweiten Controller (Aᵢ) zugeordneten Stromerzeugungseinheit (Gᵢ) und/oder der diesem zweiten Controller (Aᵢ) zugeordneten Stromspeichereinheit (Batᵢ) an die Anschlussklemme (10) abgegeben oder aufgenommen wird,
wobei der zentrale erste Controller (100) ein erstes Spannungskorrekturglied (5) mit einer vorgegebenen zweiten Übertragungsfunktion corr aufweist,
wobei der erste Controller (100) dazu konfiguriert ist, zu berechnen ${U}_{centraleRef} = f \left({P}_{centrale}\right)$ ${U}_{offset} = corr \left({U}_{centraleRef}-{U}_{Rmes}\right)$
wobei U_{offset} eine zentrale erste Offset-Spannung ist, die durch Anwendung der zweiten vorgegebenen Übertragungsfunktion corr des ersten Korrekturglieds auf die Differenz U_{centraleRef} - U_{Rmes} berechnet wird, wobei der erste Controller (100) dazu konfiguriert ist, die zweite Offset-Spannung U_{offset(i)} gemäß einer vorgegebenen dritten Funktion (gᵢ) aus der zentralen ersten Offset-Spannung U_{offset} zu berechnen und die zweite Offset-Spannung U_{offset(i)} an den zweiten Controller (Aᵢ) für die diesem zweiten Controller (Aᵢ) zugeordnete Stromerzeugungseinheit (Gᵢ) und/oder für die diesem zweiten Controller (Aᵢ) zugeordnete Stromspeichereinheit (Batᵢ) zu übertragen,
wobei der zweite Controller (Aᵢ) dazu konfiguriert ist, mindestens eine lokale Sollspannung U_{ref(i)} für die diesem zweiten Controller (Aᵢ) zugeordnete Stromerzeugungseinheit (Gᵢ) und/oder für die diesem zweiten Controller (Aᵢ) zugeordnete Stromspeichereinheit (Batᵢ) zu berechnen gemäß ${U}_{ref \left(i\right)} = {U}_{offset \left(i\right)} - {K}_{UQ \left(i\right)} . {Q}_{mes \left(i\right)}$
wobei K_{UQ(i)} ein vorgegebener Koeffizient ungleich Null ist.

2. Steuerungsvorrichtung nach Anspruch 1, **dadurch gekennzeichnet, dass** der zentrale erste Controller (100) ein weiteres Mess- oder Bestimmungselement (4) einer ersten Gesamtblindleistung Qₘₑₛ aufweist, die aus dem Kraftwerk (C) abfließt, die von der Stromerzeugungseinheit (Gᵢ) und/oder der Stromspeichereinheit (Batᵢ) abgegeben oder aufgenommen wird,
wobei die erste vorgegebene Funktion f mindestens abhängt:
- von der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird,
- und von der ersten Gesamtblindleistung Qₘₑₛ, die aus dem Kraftwerk (C) abfließt, die von der Stromerzeugungseinheit (Gᵢ) und/oder der Stromspeichereinheit (Batᵢ) abgegeben oder aufgenommen wird.

3. Steuerungsvorrichtung nach Anspruch 1, **dadurch gekennzeichnet, dass** die erste vorgegebene Funktion f affin oder linear ist und abhängt:
- von der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird.

4. Steuerungsvorrichtung nach Anspruch 2, **dadurch gekennzeichnet, dass** die erste vorgegebene Funktion f affin oder linear ist.

5. Steuerungsvorrichtung nach Anspruch 1 oder 2, **dadurch gekennzeichnet, dass** die erste vorgegebene Funktion f eine Hysteresefunktion (fH) umfasst, die für steigende Werte der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, annimmt:
- einen strikt positiven und vorgegebenen Nennspannungswert (U_{N}), wenn die steigenden Werte der Gesamtwirkleistung P_{centrale}, die aus dem Kraftwerk (C) abfließt, die von der Stromerzeugungseinheit (Gᵢ) und/oder der Stromspeichereinheit (Batᵢ) der Stromspeichereinheit abgegeben oder aufgenommen wird, größer oder gleich einem ersten, strikt negativen vorgegebenen Wirkleistungswert (P₁) werden, dabei jedoch unter einem zweiten vorgegebenen strikt positiven Wirkleistungswert (P₂) bleiben,
- einen strikt positiven und vorgegebenen Mindestspannungswert (Uₘᵢₙ), wenn die steigenden Werte der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, unter dem ersten vorgegebenen strikt negativen Leistungswert (P₁) bleiben,
- einen strikt positiven und vorgegebenen Höchstspannungswert (Uₘₐₓ), wenn die steigenden Werte der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, größer als der zweite vorgegebene strikt positive Wirkleistungswert (P₂) sind,
wobei der vorgegebene Nennspannungswert (U_{N}) größer als der vorgegebene Mindestspannungswert (Uₘᵢₙ) und kleiner als der vorgegebene Höchstspannungswert (Uₘₐₓ) ist,
wobei die Hysteresefunktion (fH) bei sinkenden Werten der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, folgende Werte annimmt:
- den strikt positiven vorgegebenen Nennspannungswert (U_{N}), wenn die sinkenden Werte der Gesamtwirkleistung P_{centrale}, die aus dem Kraftwerk (C) abließt, die von der Stromerzeugungseinheit (Gᵢ) und/oder der Stromspeichereinheit (Batᵢ) abgegeben oder aufgenommen wird, kleiner oder gleich einem vorgegebenen dritten strikt positiven Wirkleistungswert (P₃) werden, dabei jedoch über einem vierten vorgegebenen strikt negativen Wirkleistungswert (P₄) bleiben,
- den strikt positiven Mindestspannungswert (Uₘᵢₙ), wenn die sinkenden Werte der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, unter dem vierten vorgegebenen strikt negativen Wirkleistungswert (P₄₍ᵢ₎) liegen,
- den strikt positive Maximalspannungswert (Uₘₐₓ₍ᵢ₎), wenn die sinkenden Werte der Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, größer als der dritte vorgegebene strikt positive Wirkleistungswert (P₃) sind,
wobei der dritte vorgegebene strikt positive Wirkleistungswert (P₃) kleiner als der zweite vorgegebene strikt positive Wirkleistungswert (P₂) ist,
wobei der vierte vorgegebene strikt negative Wirkleistungswert (P₄) kleiner als der erste vorgegebene strikt negative Wirkleistungswert (P₁) ist.

6. Steuerungsvorrichtung nach einem beliebigen der vorstehenden Ansprüche, **dadurch gekennzeichnet, dass** der zentrale erste Controller (100) ein weiteres Mess- oder Bestimmungselement (4) einer ersten Gesamtblindleistung Qₘₑₛ aufweist, die aus dem Kraftwerk (C) abfließt, die von der Stromerzeugungseinheit (Gᵢ) und/oder der Stromspeichereinheit (Batᵢ) abgegeben oder aufgenommen wird,
wobei die erste Controller (100) aufweist:
ein sechstes Element (6) zum Berechnen jeweiliger Sollwerte (Q_{source-décentralisée-k}, Q_{source-décentralisée-k+1}) der Blindleistung jeweiliger dezentraler Stromerzeugungsquellen (Sₖ, Sₖ₊₁) des Mikronetzes (MR) für den Verbrauch und/oder die Erzeugung von Strom, die um mindestens einen von Null verschiedenen Abstand (N₁₁, N₁₂) von der gemeinsamen Anschlussklemme (10) entfernt sind, die Anteile (rₖ, rₖ₊₁) mindestens der ersten Gesamtblindleistung Qₘₑₛ sind, die aus dem Kraftwerk (C) abfließt, die von der Stromerzeugungseinheit (Gᵢ) und/oder der Stromspeichereinheit (Batᵢ) geliefert oder aufgenommen wird.

7. Steuerungsvorrichtung nach Anspruch 6, **dadurch gekennzeichnet, dass** der erste Controller (100) ferner mindestens ein siebtes Empfangselement (7) aufweist, um zu empfangen:
- jeweilige dritte Werte (Q_{mes-source-décentralisée-k}, Q_{mes-source-décentralisée-k+1}) zur Fernmessung der Blindleistung der jeweiligen dezentralen Stromerzeugungsquellen (Sₖ, Sₖ₊₁) des Mikronetzes (MR) für den Verbrauch und/oder die Erzeugung von Strom,
wobei das sechste Berechnungselement (6) dazu konfiguriert ist, eine zweite Gesamtblindleistung (Q_{microréseau}) zu berechnen, die gleich der Summe (SPR) der ersten Gesamtblindleistung Qₘₑₛ ist, die aus dem Kraftwerk (C) abfließt, die von der Stromerzeugungseinheit (Gᵢ) und/oder der Stromspeichereinheit (Batᵢ) abgegeben oder aufgenommen wird, sowie der jeweiligen dritten Werte (Q_{mes-source-décentralisée-k}, Q_{mes-source-décentralisée-k+1}) der Fernmessung der Blindleistung der jeweiligen dezentralen Stromerzeugungsquellen (Sₖ, Sₖ₊₁) des Mikronetzes (MR) für den Verbrauch und/oder die Erzeugung von Strom und um die jeweiligen Sollwerte (Q_{source-décentralisée-k}, Q_{source-décentralisée-k+1}) der Blindleistung der jeweiligen dezentralen Stromerzeugungsquellen (Sₖ, Sₖ₊₁) des Mikronetzes (MR) für den Verbrauch und/oder die Erzeugung von Strom als Anteile (rₖ, rₖ₊₁) der Summe (Q_{microréseau}, SPR) zu berechnen.

8. Steuerungsvorrichtung nach Anspruch 6 oder 7, **dadurch gekennzeichnet, dass** die Anteile (rₖ, rₖ₊₁) in den jeweiligen Blindleistungs-Sollwerten (Q_{source-décentralisée-k}, Q_{source-décentralisée-k+1}) der jeweiligen dezentralen Stromerzeugungsquellen (Sₖ, Sₖ₊₁) des Mikronetzes (MR) für den Verbrauch und/oder die Erzeugung von Strom jeweiligen Verhältnissen einer jeweiligen vorgegebenen Blindleistungskapazität (CPRSₖ, CPRSₖ₊₁) der jeweiligen dezentralen Stromerzeugungsquelle (Sₖ, Sₖ₊₁) des Mikronetzes (MR) für den Verbrauch und/oder die Erzeugung von Strom, geteilt durch eine Summe (SCPRS) der jeweiligen vorgegebenen Blindleistungskapazitäten (CPRSₖ, CPRSₖ₊₁) der jeweiligen Stromerzeugungsquellen (Sₖ, Sₖ₊₁) der Leitung (D₁, D₂,.., D_{N}) des Mikronetzes (MR) für den Verbrauch und/oder die Erzeugung von Strom und der jeweiligen vorgegebenen Blindleistungskapazitäten (CPRSᵢ) der Stromerzeugungseinheit (Gᵢ) und/oder der Stromspeichereinheit (Batᵢ) entsprechen.

9. Steuerungsvorrichtung nach einem beliebigen der vorstehenden Ansprüche, **dadurch gekennzeichnet, dass** die dritte vorgegebene Funktion (gᵢ) die Division der zentralen ersten Offset-Spannung U_{offset} durch eine vorgegebene Nennspannung (U_{iN}) der Stromerzeugungseinheit (Gᵢ) und/oder der Stromspeichereinheit (Batᵢ) umfasst.

10. Steuerungsvorrichtung nach einem beliebigen der Ansprüche 2, 4, 6, 7, **dadurch gekennzeichnet, dass** der zentrale erste Controller (100) als weiteres Element (4) ein weiteres Element (4) zur Bestimmung der ersten Gesamtblindleistung Qₘₑₛ, die aus dem Kraftwerk (C) abfließt, die von der Stromerzeugungseinheit (Gᵢ) und/oder der Stromspeichereinheit (Batᵢ) abgegeben oder aufgenommen wird, aufweist, wobei die Summe der einzelnen ersten Blindleistungen Qₘₑₛ₍ᵢ₎ gebildet wird.

11. Steuerungsvorrichtung nach einem beliebigen der Ansprüche 2, 4, 6, 7, **dadurch gekennzeichnet, dass** der zentrale erste Controller (100) als weiteres Element (4) ein weiteres Element (4) zur Messung der ersten Gesamtblindleistung Qₘₑₛ, die aus dem Kraftwerk (C) abfließt, die von der Stromerzeugungseinheit (Gᵢ) und/oder der Stromspeichereinheit (Batᵢ) an der gemeinsamen Anschlussklemme (10) abgegeben oder aufgenommen wird, aufweist.

12. Verfahren zur Steuerung eines Kraftwerks (C), das mindestens eine Stromerzeugungseinheit (Gᵢ) und/oder mindestens eine Stromspeichereinheit (Batᵢ) sowie mindestens eine gemeinsame Anschlussklemme (10) umfasst, die mit der Stromerzeugungseinheit (Gᵢ) und/oder der Stromspeichereinheit (Batᵢ) verbunden ist und die dazu bestimmt ist, an mindestens eine Leitung (D₁, D₂, D_{N}) eines Mikronetzes (MR) für den Verbrauch und/oder die Erzeugung von Strom angeschlossen zu werden,
wobei bei dem Verfahren ein zentraler Controller (100) der Stromerzeugungseinheit (Gᵢ) und/oder der Stromspeichereinheit (Batᵢ) mindestens eine Offset-Spannung U_{offset(i)} jeder Stromerzeugungseinheit (Gᵢ) und/oder jeder Stromspeichereinheit (Batᵢ) berechnet (E5) und an mindestens einen zweiten Controller (Aᵢ) jeder Stromerzeugungseinheit (Gᵢ) und/oder Stromspeichereinheit (Batᵢ) überträgt, damit die Spannung an der gemeinsamen Anschlussklemme (10) auf eine Spannungsreferenz U_{centraleRef} eingestellt wird,
**dadurch gekennzeichnet, dass**
mit einem ersten Mess- oder Bestimmungselement (1) des zentralen ersten Controllers (100) eine Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, gemessen oder bestimmt wird (E1),
mit einem zweiten Messelement (2) des zentralen ersten Controllers (100) eine Spannung U_{Rmes} an der gemeinsamen Anschlussklemme (10) gemessen wird (E2),
mit einem dritten Rechenelement (3) des zentralen ersten Controllers (100) eine Spannungsreferenz U_{centraleRef} an der gemeinsamen Anschlussklemme (10) gemäß einer ersten vorgegebenen Funktion f, die mindestens von der Gesamtwirkleistung P_{centrale} abhängt, berechnet wird (E3),
mit einem vierten Mess- oder Bestimmungselement (4ᵢ) des zweiten Controllers (Aᵢ) eine erste individuellen Blindleistung Qₘₑₛ₍ᵢ₎, die von der diesem zweiten Controller (Aᵢ) zugeordneten Stromerzeugungseinheit (Gᵢ) und/oder der diesem zweiten Controller (Aᵢ) zugeordneten Stromspeichereinheit (Batᵢ) an die Anschlussklemme (10) abgegeben oder aufgenommen wird, gemessen oder bestimmt wird (E4),
wobei der zentrale erste Controller (100) ein erstes Spannungskorrekturglied (5) mit einer vorgegebenen zweiten Übertragungsfunktion corr aufweist,
wobei von dem zentralen ersten Controller (100) berechnet wird (E5) ${U}_{centraleRef} = f \left({P}_{centrale}\right)$ ${U}_{offset} = corr \left({U}_{centraleRef}-{U}_{Rmes}\right)$
wobei U_{offset} eine zentrale erste Offset-Spannung ist, die durch Anwendung der vorgegebenen zweiten Übertragungsfunktion corr des ersten Korrekturglieds auf die Differenz U_{centraleRef} - U_{Rmes} berechnet wird,
wobei von dem ersten Controller (100) die zweite Offset-Spannung U_{offset(i)} aus der zentralen ersten Offset-Spannung U_{offset} gemäß einer vorgegebenen dritten Funktion (gᵢ) berechnet wird (E6) und von dem ersten Controller (100) die zweite Offset-Spannung U_{offset(i)} an den zweiten Controller (Aᵢ) für die diesem zweiten Controller (Aᵢ) zugeordnete Stromerzeugungseinheit (Gᵢ) und/oder für die diesem zweiten Controller (Aᵢ) zugeordnete Stromspeichereinheit (Batᵢ) übertragen wird,
von dem zweiten Controller (Aᵢ) mindestens eine lokale Sollspannung U_{ref(i)} für die diesem zweiten Controller (Aᵢ) zugeordnete Stromerzeugungseinheit (Gᵢ) und/oder für die diesem zweiten Controller (Aᵢ) zugeordnete Stromspeichereinheit (Batᵢ) berechnet wird (E7) gemäß ${U}_{ref \left(i\right)} = {U}_{offset \left(i\right)} - {K}_{UQ \left(i\right)} . {Q}_{mes \left(i\right)}$
wobei K_{UQ(i)} ein vorgegebener Koeffizient ungleich Null ist.

13. Computerprogramm, das Codeanweisungen für die Durchführung eines Steuerungsverfahrens eines Kraftwerks (C) aufweist, das mindestens eine Stromerzeugungseinheit (Gᵢ) und/oder mindestens eine Stromspeichereinheit (Batᵢ) und mindestens eine gemeinsame Anschlussklemme (10) aufweist, die mit der Stromerzeugungseinheit (Gᵢ) und/oder der Stromspeichereinheit (Batᵢ) verbunden ist und die dazu bestimmt ist, an mindestens eine Leitung (D₁, D₂, D_{N}) eines Mikronetzes (MR) für den Verbrauch und/oder die Erzeugung von Strom angeschlossen zu werden,
wobei bei dem Verfahren ein zentraler Controller (100) der Stromerzeugungseinheit (Gᵢ) und/oder der Stromspeichereinheit (Batᵢ) mindestens eine Offset-Spannung U_{offset(i)} jeder Stromerzeugungseinheit (Gᵢ) und/oder jeder Stromspeichereinheit (Batᵢ) berechnet (E5) und an mindestens einen zweiten Controller (Aᵢ) jeder Stromerzeugungseinheit (Gᵢ) und/oder Stromspeichereinheit (Batᵢ) überträgt, damit die Spannung an der gemeinsamen Anschlussklemme (10) auf eine Spannungsreferenz U_{centraleRef} eingestellt wird,
**dadurch gekennzeichnet, dass**
mit einem ersten Mess- oder Bestimmungselement (1) des zentralen ersten Controllers (100) eine Gesamtwirkleistung P_{centrale}, die aus dem Kraftwerk (C) abfließt, die von der Stromerzeugungseinheit (Gᵢ) und/oder der Stromspeichereinheit (Batᵢ) abgegeben oder aufgenommen wird, gemessen oder bestimmt wird (E1),
mit einem zweiten Messelement (2) des zentralen ersten Controllers (100) eine Spannung U_{Rmes} an der gemeinsamen Anschlussklemme (10) gemessen wird (E2) ,
mit einem dritten Rechenelement (3) des zentralen ersten Controllers (100) eine Spannungsreferenz U_{centraleRef} an der gemeinsamen Anschlussklemme (10) gemäß einer ersten vorgegebenen Funktion f, die mindestens von der Gesamtwirkleistung P_{centrale} abhängt, berechnet wird (E3),
mit einem vierten Mess- oder Bestimmungselement (4ᵢ) des zweiten Controllers (Aᵢ) eine erste individuellen Blindleistung Qₘₑₛ₍ᵢ₎, die von der diesem zweiten Controller (Aᵢ) zugeordneten Stromerzeugungseinheit (Gᵢ) und/oder der diesem zweiten Controller (Aᵢ) zugeordneten Stromspeichereinheit (Batᵢ) an die Anschlussklemme (10) abgegeben oder aufgenommen wird, gemessen oder bestimmt wird (E4),
wobei der zentrale erste Controller (100) ein erstes Spannungskorrekturglied (5) mit einer vorgegebenen zweiten Übertragungsfunktion corr aufweist,
wobei von dem zentralen ersten Controller (100) berechnet wird (E5) ${U}_{centraleRef} = f \left({P}_{centrale}\right)$ ${U}_{offset} = corr \left({U}_{centraleRef}-{U}_{Rmes}\right)$
wobei U_{offset} eine zentrale erste Offset-Spannung ist, die durch Anwendung der vorgegebenen zweiten Übertragungsfunktion corr des ersten Korrekturglieds auf die Differenz U_{centraleRef} - U_{Rmes} berechnet wird,
wobei von dem ersten Controller (100) die zweite Offset-Spannung U_{offset(i)} aus der zentralen ersten Offset-Spannung U_{offset} gemäß einer vorgegebenen dritten Funktion (gᵢ) berechnet wird (E6) und von dem ersten Controller (100) die zweite Offset-Spannung U_{offset(i)} an den zweiten Controller (Aᵢ) für die diesem zweiten Controller (Aᵢ) zugeordnete Stromerzeugungseinheit (Gᵢ) und/oder für die diesem zweiten Controller (Aᵢ) zugeordnete Stromspeichereinheit (Batᵢ) übertragen wird,
von dem zweiten Controller (Aᵢ) mindestens eine lokale Sollspannung U_{ref(i)} für die diesem zweiten Controller (Aᵢ) zugeordnete Stromerzeugungseinheit (Gᵢ) und/oder für die diesem zweiten Controller (Aᵢ) zugeordnete Stromspeichereinheit (Batᵢ) berechnet wird (E7) gemäß ${U}_{ref \left(i\right)} = {U}_{offset \left(i\right)} - {K}_{UQ \left(i\right)} . {Q}_{mes \left(i\right)}$
wobei K_{UQ(i)} ein vorgegebener Koeffizient ungleich Null ist,
wobei das Computerprogramm von dem zentralen ersten Controller (100) und von dem zweiten Controller (Aᵢ) ausgeführt wird.

## Claims

1. A device for controlling a plant (C), wherein the plant comprises at least one electricity generation unit (Gᵢ) and/or at least one electricity storage unit (Batᵢ), and at least one common connection terminal (10), which is connected to the electricity generation unit (Gᵢ) and/or to the electricity storage unit (Batᵢ) and which is intended to be connected to at least one line (D₁, D₂, D_{N}) of an electricity consumption and/or production microgrid (MR),
the control device comprising at least one first central automatic controller (100) as well as at least one second automatic controller (Aᵢ) for each electricity generation unit (Gᵢ) and/or electricity storage unit (Batᵢ), the second automatic controller (Aᵢ) being connected to the first central automatic controller (100), the first central automatic controller (100) being configured to compute and transmit to the second automatic controller (Aᵢ) at least one offset voltage U_{offset(i)} of each electricity generation unit (Gᵢ) and/or of each electricity storage unit (Batᵢ), so that the voltage of the common connection terminal (10) is set to a voltage reference U_{centraleRef}, **characterized in that** the first central automatic controller (100) comprises
a first member (1) for measuring or determining a total active power P_{centrale} leaving the plant (C), supplied or absorbed by the electricity generation unit (Gᵢ) and/or the electricity storage unit (Batᵢ),
a second member (2) for measuring or determining a voltage U_{Rmes} of the common connection terminal (10),
a third computing member (3) for computing the voltage reference U_{centraleRef} of the common connection terminal (10) according to a first prescribed function f depending at least on the total active power P_{centrale},
each second automatic controller (Aᵢ) comprises a fourth member (4ᵢ) for measuring or determining a first individual reactive power Qₘₑₛ₍ᵢ₎ supplied or absorbed by the electricity generation unit (Gᵢ) associated with this second automatic controller (Aᵢ) and/or the electricity storage unit (Batᵢ) associated with this second automatic controller (Aᵢ) to the connection terminal (10),
the first central automatic controller (100) comprises a first voltage corrector (5), having a second prescribed transfer function corr,
the first automatic controller (100) being configured to compute ${U}_{centraleRef} = f \left({P}_{centrale}\right)$ ${U}_{offset} = corr \left({U}_{centraleRef}-{U}_{Rmes}\right)$
where U_{offset} is a first central offset voltage, computed by applying the second prescribed transfer function corr of the first corrector to the difference U_{centraleRef} - U_{Rmes}, the first automatic controller (100) is configured to compute the second offset voltage U_{offset(i)} according to a third prescribed function (gᵢ) from the first central offset voltage U_{offset} and to transmit the second offset voltage U_{offset(i)} to the second automatic controller (Aᵢ) for the electricity generation unit (Gᵢ) associated with this second automatic controller (Aᵢ) and/or for the electricity storage unit (Batᵢ) associated with this second automatic controller (Aᵢ),
the second automatic controller (Aᵢ) is configured to compute at least a local setpoint voltage U_{ref(i)} for the electricity generation unit (Gᵢ) associated with this second automatic controller (Aᵢ) and/or for the electricity storage unit (Batᵢ) associated with this second automatic controller (Aᵢ), according to ${U}_{ref \left(i\right)} = {U}_{offset \left(i\right)} - {K}_{UQ \left(i\right)} . {Q}_{mes \left(i\right)}$
where K_{UQ(i)} is a prescribed, non-zero coefficient.

2. The control device as claimed in claim 1, **characterized in that** the first central automatic controller (100) comprises another member (4) for measuring or determining a first total reactive power Qₘₑₛ leaving the plant (C), supplied or absorbed by the electricity generation unit (Gᵢ) and/or the electricity storage unit (Batᵢ),
the first prescribed function f depends at least on:
- the total active power P_{centrale} leaving the plant (C), supplied or absorbed by the electricity generation unit (Gᵢ) and/or the electricity storage unit (Batᵢ),
- and on the first total reactive power Qₘₑₛ leaving the plant (C), supplied or absorbed by the electricity generation unit (Gᵢ) and/or the electricity storage unit (Batᵢ).

3. The control device as claimed in claim 1, **characterized in that** the first prescribed function f is affine or linear and depends on:
- the total active power P_{centrale} leaving the plant (C), supplied or absorbed by the electricity generation unit (Gᵢ) and/or the electricity storage unit (Batᵢ).

4. The control device as claimed in claim 2, **characterized in that** the first prescribed function f is affine or linear.

5. The control device as claimed in claim 1 or 2, **characterized in that** the first prescribed function f comprises a hysteresis function (fH), which takes for the increasing values of the total active power P_{centrale} leaving the plant (C), supplied or absorbed by the electricity generation unit (Gᵢ) and/or the electricity storage unit (Batᵢ):
- a strictly positive and prescribed nominal voltage value (U_{N}), when the increasing values of the total active power P_{centrale} leaving the plant (C), supplied or absorbed by the electricity generation unit (Gᵢ) and/or the electricity storage unit (Batᵢ) become higher than or equal to a first prescribed strictly negative active power value (P₁) while remaining lower than a second prescribed strictly positive active power value (P₂),
- a strictly positive and prescribed minimum voltage value (Uₘᵢₙ), when the increasing values of the total active power P_{centrale} leaving the plant (C), supplied or absorbed by the electricity generation unit (Gᵢ) and/or the electricity storage unit (Batᵢ) remain lower than the first prescribed strictly negative active power value (P₁),
- a strictly positive and prescribed maximum voltage value (Uₘₐₓ), when the increasing values of the total active power P_{centrale} leaving the plant (C), supplied or absorbed by the electricity generation unit (Gᵢ) and/or the electricity storage unit (Batᵢ) are higher than the second prescribed strictly positive active power value (P₂),
the prescribed nominal voltage value (U_{N}) being higher than the prescribed minimum voltage value (Uₘᵢₙ) and being lower than the prescribed maximum voltage value (Uₘₐₓ),
the hysteresis function (fH) taking for the decreasing values of the total active power P_{centrale} leaving the plant (C), supplied or absorbed by the electricity generation unit (Gᵢ) and/or the electricity storage unit (Batᵢ):
- the strictly positive prescribed nominal voltage value (U_{N}), when the decreasing values of the total active power P_{centrale} leaving the plant (C), supplied or absorbed by the electricity generation unit (Gᵢ) and/or the electricity storage unit (Batᵢ) become lower than or equal to a third prescribed strictly positive active power value (P₃) while remaining higher than a fourth prescribed strictly negative active power value (P₄),
- the strictly positive minimum voltage value (Uₘᵢₙ), when the decreasing values of the total active power P_{centrale} leaving the plant (C), supplied or absorbed by the electricity generation unit (Gᵢ) and/or the electricity storage unit (Batᵢ) are lower than the fourth prescribed strictly negative active power value (P₄₍ᵢ₎),
- the strictly positive maximum voltage value (Uₘₐₓ₍ᵢ₎), when the decreasing values of the total active power P_{centrale} leaving the plant (C), supplied or absorbed by the electricity generation unit (Gᵢ) and/or the electricity storage unit (Batᵢ) are higher than the third prescribed strictly positive active power value (P₃),
the third prescribed strictly positive active power value (P₃) being lower than the second prescribed strictly positive active power value (P₂),
the fourth prescribed strictly negative active power value (P₄) being lower than the first prescribed strictly negative active power value (P₁).

6. The device as claimed in any of the preceding claims, **characterized in that** the first central automatic controller (100) comprises another member (4) for measuring or determining a first total reactive power Qₘₑₛ leaving the plant (C), supplied or absorbed by the electricity generation unit (Gᵢ) and/or the electricity storage unit (Batᵢ),
the first automatic controller (100) comprises:
a sixth member (6) for computing reactive power setpoints (Q_{source-décentralisée-k}, Q_{source-décentralisée-k+1}) of respective decentralized electricity production sources (Sₖ, Sₖ₊₁) of the electricity consumption and/or production microgrid (MR), remote by at least a non-zero distance (N₁₁, N₁₂) from the common connection terminal (10), which are proportions (rₖ, rₖ₊₁) at least of the first total reactive power Qₘₑₛ leaving the plant (C), supplied or absorbed by the electricity generation unit (Gᵢ) and/or the electricity storage unit (Batᵢ).

7. The device as claimed in claim 6, **characterized in that** the first automatic controller (100) further comprises at least a seventh receiving member (7) to receive:
- third respective reactive power remote measurement values (Q_{mes-source-décentralisée-k}, Q_{mes-source-décentralisée-k+1}) of the respective decentralized electricity production sources (Sₖ, Sₖ₊₁) of the electricity consumption and/or production microgrid (MR),
the sixth computing member (6) being configured to compute a second total reactive power (Q_{microréseau}) equal to the sum (SPR) of the first total reactive power Qₘₑₛ leaving the plant (C), supplied or absorbed by the electricity generation unit (Gᵢ) and/or the electricity storage unit (Batᵢ) and of the third reactive power remote measurement values (Q_{mes-source-décentralisée-k}, Q_{mes-source-décentralisée-k+1}) of the respective decentralized electricity production sources (Sₖ, Sₖ₊₁) of the electricity consumption and/or production microgrid (MR) and to compute the reactive power setpoints (Q_{source-décentralisée-k} , Q_{source-décentralisée-k+1}) of the respective decentralized electricity production sources (Sₖ, Sₖ₊₁) of the electricity consumption and/or production microgrid (MR) as being proportions (rₖ, rₖ₊₁) of said sum (Q_{microréseau}, SPR).

8. The device as claimed in claim 6 or 7, **characterized in that** said proportions (rₖ, rₖ₊₁) in the reactive power setpoints (Q_{source-décentralisée-k}, Q_{source-décentralisée-k+1}) of the respective decentralized electricity production sources (Sₖ, Sₖ₊₁) of the electricity consumption and/or production microgrid (MR) correspond to respective ratios of a prescribed reactive power capacity (CPRSₖ, CPRSₖ₊₁) of the respective decentralized electricity production sources (Sₖ, Sₖ₊₁) of the electricity consumption and/or production microgrid (MR), divided by a sum (SCPRS) of the prescribed reactive power capacities (CPRSₖ, CPRSₖ₊₁) of the respective electricity production sources (Sₖ, Sₖ₊₁) of the line (D₁, D₂,.., D_{N}) of the electricity consumption and/or production microgrid (MR) and of the respective prescribed reactive power capacities (CPRSᵢ) of the electricity generation unit (Gᵢ) and/or of the electricity storage unit (Batᵢ).

9. The device as claimed in any one of the preceding claims, **characterized in that** the third prescribed function (gᵢ) comprises the division of the first central offset voltage U_{offset} by a prescribed nominal voltage (U_{iN}) of the electricity generation unit (Gᵢ) and/or of the electricity storage unit (Batᵢ).

10. The device as claimed in any one of claims 2, 4, 6 and 7, **characterized in that** the first central automatic controller (100) comprises, as other member (4), another member (4) for determining the first total reactive power Qₘₑₛ leaving the plant (C), supplied or absorbed by the electricity generation unit (Gᵢ) and/or the electricity storage unit (Batᵢ) by summing the first individual reactive powers Qₘₑₛ₍ᵢ₎.

11. The device as claimed in any one of claims 2, 4, 6 and 7, **characterized in that** the first central automatic controller (100) comprises, as other member (4), another member (4) for measuring the first total reactive power Qₘₑₛ leaving the plant (C), supplied or absorbed by the electricity generation unit (Gᵢ) and/or the electricity storage unit (Batᵢ) on the common connection terminal (10).

12. A method for controlling a plant (C), wherein the plant comprises at least one electricity generation unit (Gᵢ) and/or at least one electricity storage unit (Batᵢ), and at least one common connection terminal (10), which is connected to the electricity generation unit (Gᵢ) and/or to the electricity storage unit (Batᵢ) and which is intended to be connected to at least one line (D₁, D₂, D_{N}) of an electricity consumption and/or production microgrid (MR),
a method in which a central automatic controller (100) for controlling the electricity generation unit (Gᵢ) and/or of the electricity storage unit (Batᵢ) computes (E5) and transmits at least one offset voltage U_{offset(i)} of each electricity generation unit (Gᵢ) and/or of each electricity storage unit (Batᵢ) to at least a second automatic controller (Aᵢ) for controlling each electricity generation unit (Gᵢ) and/or electricity storage unit (Batᵢ), so that the voltage of the common connection terminal (10) is set to a voltage reference U_{centraleRef},
**characterized by**
measuring or determining (E1) by a first measuring or determining member (1) of the first central automatic controller (100) a total active power P_{centrale} leaving the plant (C), supplied or absorbed by the electricity generation unit (Gᵢ) and/or the electricity storage unit (Batᵢ),
measuring (E2) by a second measuring member (2) of the first central automatic controller (100) a voltage U_{Rmes} of the common connection terminal (10),
computing (E3) by a third computing member (3) of the first central automatic controller (100) a voltage reference U_{centraleRef} of the common connection terminal (10) according to a first prescribed function f depending at least on the total active power P_{centrale},
measuring or determining (E4) by a fourth measuring or determining member (4ᵢ) of the second automatic controller (Aᵢ) a first individual reactive power Qₘₑₛ₍ᵢ₎ supplied or absorbed by the electricity generation unit (Gᵢ) associated with this second automatic controller (Aᵢ) and/or by the electricity storage unit (Batᵢ) associated with this second automatic controller (Aᵢ) to the connection terminal (10),
the first central automatic controller (100) having a first voltage corrector (5), having a second prescribed transfer function corr,
computing (E5) by the first central automatic controller (100) ${U}_{centraleRef} = f \left({P}_{centrale}\right)$ ${U}_{offset} = corr \left({U}_{centraleRef}-{U}_{Rmes}\right)$
where U_{offset} is a first central offset voltage, computed by applying the second prescribed transfer function corr of the first corrector to the difference U_{centraleRef} - U_{Rmes},
computing (E6) by the first automatic controller (100) the second offset voltage U_{offset(i)} from the first central offset voltage U_{offset} according to a third prescribed function (gᵢ) and transmitting by the first automatic controller (100) the second offset voltage U_{offset(i)} to the second automatic controller (Aᵢ) for the electricity generation unit (Gᵢ) associated with this second automatic controller (Aᵢ) and/or for the electricity storage unit (Batᵢ) associated with this second automatic controller (Aᵢ),
computing (E7) by the second automatic controller (Aᵢ) at least a local setpoint voltage U_{ref(i)} for the electricity generation unit (Gᵢ) associated with this second automatic controller (Aᵢ) and/or for the electricity storage unit (Batᵢ) associated with this second automatic controller (Aᵢ), according to ${U}_{ref \left(i\right)} = {U}_{offset \left(i\right)} - {K}_{UQ \left(i\right)} . {Q}_{mes \left(i\right)}$
where K_{UQ(i)} is a prescribed, non-zero coefficient.

13. A computer program comprising code instructions for implementing a method for controlling a plant (C), wherein the plant comprises at least one electricity generation unit (Gᵢ) and/or at least one electricity storage unit (Batᵢ), and at least one common connection terminal (10), which is connected to the electricity generation unit (Gᵢ) and/or to the electricity storage unit (Batᵢ) and which is intended to be connected to at least one line (D₁, D₂, D_{N}) of an electricity consumption and/or production microgrid (MR),
a method in which a central automatic controller (100) for controlling the electricity generation unit (Gᵢ) and/or of the electricity storage unit (Batᵢ) computes (E5) and transmits at least one offset voltage U_{offset(i)} of each electricity generation unit (Gᵢ) and/or of each electricity storage unit (Batᵢ) to at least a second automatic controller (Aᵢ) for controlling each electricity generation unit (Gᵢ) and/or electricity storage unit (Batᵢ), so that the voltage of the common connection terminal (10) is set to a voltage reference U_{centraleRef},
**characterized by**
measuring or determining (E1) by a first measuring or determining member (1) of the first central automatic controller (100) a total active power P_{centrale} leaving the plant (C), supplied or absorbed by the electricity generation unit (Gᵢ) and/or the electricity storage unit (Batᵢ),
measuring (E2) by a second measuring member (2) of the first central automatic controller (100) a voltage U_{Rmes} of the common connection terminal (10),
computing (E3) by a third computing member (3) of the first central automatic controller (100) a voltage reference U_{centraleRef} of the common connection terminal (10) according to a first prescribed function f depending at least on the total active power P_{centrale},
measuring or determining (E4) by a fourth measuring or determining member (4ᵢ) of the second automatic controller (Aᵢ) a first individual reactive power Qₘₑₛ₍ᵢ₎ supplied or absorbed by the electricity generation unit (Gᵢ) associated with this second automatic controller (Aᵢ) and/or by the electricity storage unit (Batᵢ) associated with this second automatic controller (Aᵢ) to the connection terminal (10),
the first central automatic controller (100) having a first voltage corrector (5), having a second prescribed transfer function corr,
computing (E5) by the first central automatic controller (100) ${U}_{centraleRef} = f \left({P}_{centrale}\right)$ ${U}_{offset} = corr \left({U}_{centraleRef}-{U}_{Rmes}\right)$
where U_{offset} is a first central offset voltage, computed by applying the second prescribed transfer function corr of the first corrector to the difference U_{centraleRef} - U_{Rmes},
computing (E6) by the first automatic controller (100) the second offset voltage U_{offset(i)} from the first central offset voltage U_{offset} according to a third prescribed function (gᵢ) and transmitting by the first automatic controller (100) the second offset voltage U_{offset(i)} to the second automatic controller (Aᵢ) for the electricity generation unit (Gᵢ) associated with this second automatic controller (Aᵢ) and/or for the electricity storage unit (Batᵢ) associated with this second automatic controller (Aᵢ),
computing (E7) by the second automatic controller (Aᵢ) at least a local setpoint voltage U_{ref(i)} for the electricity generation unit (Gᵢ) associated with this second automatic controller (Aᵢ) and/or for the electricity storage unit (Batᵢ) associated with this second automatic controller (Aᵢ), according to ${U}_{ref \left(i\right)} = {U}_{offset \left(i\right)} - {K}_{UQ \left(i\right)} . {Q}_{mes \left(i\right)}$
where K_{UQ(i)} is a prescribed, non-zero coefficient,
the computer program being executed by the first central automatic controller (100) and by the second automatic controller (Aᵢ).
